# EUROPEAN PATENT APPLICATION

(11) **EP 4 632 021 A1**
(43) Date of publication of application: **15.10.2025**
(21) Application number: 23900326.2
(22) Date of filing: 20.10.2023
(51) Int. Cl.: C09D 11/30, B41J 2/01, B41M 5/00, C09D 11/40

(54) **ACTIVE ENERGY RAY-CURABLE INKJET INK, ACTIVE ENERGY RAY-CURABLE INK SET, AND IMAGE RECORDING METHOD**

(30) Priority: 05.12.2022 JP 2022194438
(71) Applicant: FUJIFILM Corporation, Tokyo 106-8620 (JP)
(72) Inventor: UMEBAYASHI, Tsutomu, Ashigarakami-gun, Kanagawa 258-8577 (JP)
(74) Representative: Klunker IP Patentanwälte PartG mbB
(86) International application number: PCT/JP2023/038075
(87) International publication number: WO 2024/122204

(57) **Abstract**

Provided is an active energy ray curable type ink jet ink including a bifunctional (meth)acrylate having a linear or branched alkylene group having 5 to 9 carbon atoms, a monofunctional (meth)acrylate having a hydroxy group, and a coloring agent. The total content of the bifunctional (meth)acrylate and the monofunctional (meth)acrylate with respect to the total amount of polymerizable compounds contained in the active energy ray curable type ink jet ink is 80% by mass or more. Also provided are applications of the active energy ray curable type ink jet ink.

## Description

### BACKGROUND OF THE INVENTION

### 1. Field of the Invention

The present disclosure relates to an active energy ray curable type ink jet ink, an active energy ray curable type ink set, and an image recording method.

### 2. Description of the Related Art

In one previously known method for recording an image on a substrate using an ink, the ink is cured using active energy rays.

For example, JP2022-030775A describes a photocurable ink jet printing ink composition satisfying all of the following requirements A to F:
A: the total content of one or more compounds selected from vinyl methyl oxazolidinone, N,N-dimethylacrylamide, benzyl acrylate, and N-vinylcaprolactam is 30.0% by mass or more in the photocurable ink jet printing ink composition;
B: the total content of one or more compounds selected from saturated hydrocarbon group-containing monofunctional monomers having 6 or more carbon atoms and saturated hydrocarbon group-containing polyfunctional monomers having 6 or more carbon atoms is 15.0% by mass or more in the photocurable ink jet printing ink composition;
C: the content of bis(2,4,6-trimethylbenzoyl)phenylphosphine oxide is 2.5% by mass or less in the photocurable ink jet printing ink composition;
D: the content of ethoxy(2,4,6-trimethylbenzoyl)phenylphosphine oxide is 6.5 to 13.0% by mass in the photocurable ink jet printing ink composition;
E: the content of an amine-modified oligomer is 0.5 to 15.0% by mass in the photocurable ink jet printing ink composition; and
F: a white pigment used as a coloring agent is contained in an amount of 17.0% by mass or less or is not contained at all in the photocurable ink jet printing ink composition.

### SUMMARY OF THE INVENTION

In some cases, an image recorded article obtained by applying an ink to a substrate is required to have a low odor and good water resistance.

The present disclosure has been made in view of the foregoing circumstances, and an object to be achieved by one embodiment of the present invention is to provide an active energy ray curable type ink jet ink having good j ettability and capable of providing an image recorded article having a low odor and good water resistance.

An object to be achieved by another embodiment of the present invention is to provide an active energy ray curable type ink set having good jettability and capable of providing an image recorded article that has a low odor and good water resistance and in which alkali peelability of the image from the substrate is good.

An object to be achieved by another embodiment of the present invention is to provide an image recording method in which jettability is good and by which an image recorded article having a low odor and good water resistance can be obtained.

The present disclosure includes the following aspects.
<1> An active energy ray curable type ink jet ink including: a bifunctional (meth)acrylate having a linear or branched alkylene group having 5 to 9 carbon atoms; a monofunctional (meth)acrylate having a hydroxy group; and a coloring agent,
   wherein a total content of the bifunctional (meth)acrylate and the monofunctional (meth)acrylate with respect to a total amount of polymerizable compounds contained in the active energy ray curable type ink jet ink is 80% by mass or more.
<2> The active energy ray curable type ink jet ink according to <1>, wherein a ratio of a content mass of the bifunctional (meth)acrylate to a content mass of the monofunctional (meth)acrylate is 0.3 to 3.5.
<3> The active energy ray curable type ink jet ink according to <1> or <2>, further including phenylbis(2,4,6-trimethylbenzoyl)phosphine oxide and (2,4,6-trimethylbenzoyl)ethoxyphenylphosphine oxide as polymerization initiators, wherein a total content of the polymerization initiators with respect to a total amount of the active energy ray curable type ink jet ink is 5% by mass or more.
<4> The active energy ray curable type ink jet ink according to any one of <1> to <3>, wherein the monofunctional (meth)acrylate has a molecular weight of 130 to 150.
<5> An active energy ray curable type ink set including: a first ink containing a bifunctional (meth)acrylate having a linear or branched alkylene group having 5 to 9 carbon atoms, a monofunctional (meth)acrylate having a hydroxy group, and a coloring agent; and a second ink,
   wherein, in the first ink, a total content of the bifunctional (meth)acrylate and the monofunctional (meth)acrylate with respect to a total amount of polymerizable compounds contained in the first ink is 80% by mass or more, and
   wherein, when cured products of the second ink are immersed in water with a pH of 7 or an alkaline aqueous solution with a pH of 10 for 5 minutes, a pencil hardness of the cured product immersed in the alkaline aqueous solution with a pH of 10 is lower than a pencil hardness of the cured product immersed in the water with a pH of 7.
<6> The active energy ray curable type ink set according to <5>, wherein the second ink contains at least one acid group-containing compound selected from the group consisting of an acid group-containing polymerizable monomer and an acid group-containing polymer, and
   wherein a total content of the at least one acid group-containing compound with respect to a total amount of the second ink is 8% by mass or more.
<7> The active energy ray curable type ink set according to <5> or <6>, wherein the second ink contains a bifunctional (meth)acrylate having a linear or branched alkylene group having 5 to 9 carbon atoms, a monofunctional (meth)acrylate having a hydroxy group, and at least one acid group-containing compound selected from the group consisting of an acid group-containing polymerizable monomer and an acid group-containing polymer, wherein a total content of the acid group-containing polymerizable monomer, the bifunctional (meth)acrylate, and the monofunctional (meth)acrylate with respect to a total amount of polymerizable compounds contained in the second ink is 70% by mass or more.
<8> The active energy ray curable type ink set according to any one of <5> to <7>, wherein, in the first ink, a ratio of a content mass of the bifunctional (meth)acrylate to a content mass of the monofunctional (meth)acrylate is 0.3 to 3.5.
<9> The active energy ray curable type ink set according to any one of <5> to <8>, wherein the first ink further contains phenylbis(2,4,6-trimethylbenzoyl)phosphine oxide and (2,4,6-trimethylbenzoyl)ethoxyphenylphosphine oxide as polymerization initiators, and wherein a total content of the polymerization initiators with respect to a total amount of an active energy ray curable type ink is 5% by mass or more.
<10> The active energy ray curable type ink set according to any one of <5> to <9>, wherein, in the first ink, the monofunctional (meth)acrylate has a molecular weight of 130 to 150.
<11> An image recording method including the steps of:
   applying the active energy ray curable type ink jet ink according to any one of <1> to <4> to a substrate using an ink jet recording method; and
   irradiating the applied active energy ray curable type ink jet ink with active energy rays. <12> An image recording method that uses the active energy ray curable type ink set according to any one of <5> to <10>, the method including the steps of:
      applying the second ink to a substrate using an ink jet recording method;
      irradiating the applied second ink with active energy rays;
      applying, using the ink jet recording method, the first ink to the substrate with the second ink applied thereto; and
      irradiating the applied first ink with active energy rays.

One embodiment of the present invention provides an active energy ray curable type ink jet ink having good jettability and capable of providing an image recorded article having a low odor and good water resistance.

Another embodiment of the present invention provides an active energy ray curable type ink set having good jettability and capable of providing an image recorded article that has a low odor and good water resistance and in which alkali peelability of the image from the substrate is good.

Another embodiment of the present invention provides an image recording method in which jettability is good and by which an image recorded article having a low odor and good water resistance can be obtained.

### DESCRIPTION OF THE PREFERRED EMBODIMENTS

The active energy ray curable type ink jet ink of the disclosure, the active energy ray curable type ink set of the disclosure, and the image recording method of the disclosure will be described in detail.

In the present specification, a numerical range represented using "to" means a range including the numerical values before and after the "to" as the minimum value and the maximum value, respectively.

In a set of numerical ranges expressed in a stepwise manner in the present specification, the upper or lower limit in one numerical range may be replaced with the upper or lower limit in another numerical range in the set. Moreover, in a numerical range described in the present specification, the upper or lower limit in the numerical range may be replaced with a value indicated in an Example.

In the present specification, when reference is made to the amount of a component in a composition, if the composition contains a plurality of materials corresponding to the component, the amount of the component means the total amount of the plurality of materials in the composition, unless otherwise specified.

**In** the present specification, a combination of two or more preferred modes is a more preferred mode.

**In** the present specification, the term "step" is meant to include not only an independent step but also a step that is not clearly distinguished from other steps so long as the prescribed purpose of the step can be achieved.

**In** the present specification, the term "image" is a general term for films formed by the application of an ink, and the term "image recording" means the formation of an image (i.e., a film).

**In** the present specification, the concept of "image" also encompasses solid images.

**In** the present specification, the term "(meth)acrylate" is a concept that encompasses both acrylate and methacrylate. The term "(meth)acrylic" is a concept that encompasses both acrylic and methacrylic.

An active energy ray curable type ink jet ink according to an embodiment of the present disclosure (which is hereinafter referred to simply as an "ink") contains a bifunctional (meth)acrylate having a linear or branched alkylene group having 5 to 9 carbon atoms, a monofunctional (meth)acrylate having a hydroxy group, and a coloring agent, and the total content of the bifunctional (meth)acrylate having a linear or branched alkylene group having 5 to 9 carbon atoms and the monofunctional (meth)acrylate having a hydroxy group with respect to the total amount of polymerizable compounds contained in the ink is 80% by mass or more.

An image recorded article can be obtained, for example, by applying the ink according to the first embodiment of the disclosure to a substrate and then irradiating the ink with active energy rays. Specifically, in the image recorded article obtained, an ink film serving as the image is formed on the substrate. The ink according to the first embodiment of the disclosure contains the bifunctional (meth)acrylate having a linear or branched alkylene group having 5 to 9 carbon atoms and the monofunctional (meth)acrylate having a hydroxy group. Therefore, a polymerization reaction proceeds by irradiation with the active energy rays. The bifunctional (meth)acrylate having a linear or branched alkylene group having 5 to 9 carbon atoms tends to have a low odor and a low viscosity due to the presence of the linear or branched alkylene group having 5 to 9 carbon atoms. The bifunctional (meth)acrylate having the linear or branched alkylene group having 5 to 9 carbon atoms acts as a diluent in the ink and provides good jettability. The monofunctional (meth)acrylate having a hydroxy group plays a role in suppressing local accumulation of water in the ink film and improving water resistance due to the presence of the hydroxy group. When the monofunctional (meth)acrylate having a hydroxy group is present, the concentration of oxygen in the ink is reduced, and inhibition of polymerization by oxygen is suppressed, so that the curability of the ink is improved. As a result, the amount of unreacted polymerizable compounds can be reduced, and the odor can be reduced.

Since the total content of the bifunctional (meth)acrylate having a linear or branched alkylene group having 5 to 9 carbon atoms and the monofunctional (meth)acrylate having a hydroxy group is 80% by mass or more, the functions based on the bifunctional (meth)acrylate having a linear or branched alkylene group having 5 to 9 carbon atoms and the monofunctional (meth)acrylate having a hydroxy group can be exerted sufficiently.

An active energy ray curable type ink set according to an embodiment of the present disclosure (which is hereinafter referred to simply as an "ink set") includes: a first ink containing a bifunctional (meth)acrylate having a linear or branched alkylene group having 5 to 9 carbon atoms, a monofunctional (meth)acrylate having a hydroxy group, and a coloring agent; and a second ink. In the first ink, the total content of the bifunctional (meth)acrylate having a linear or branched alkylene group having 5 to 9 carbon atoms and the monofunctional (meth)acrylate having a hydroxy group with respect to the total amount of polymerizable compounds contained in the first ink is 80% by mass or more. When cured products of the second ink are immersed in water with a pH of 7 or an alkaline aqueous solution with a pH of 10 for 5 minutes, the pencil hardness of the cured product immersed in the alkaline aqueous solution with a pH of 10 is lower than the pencil hardness of the cured product immersed in the water with a pH of 7.

An image recorded article in which an ink film serving as the image is formed on a substrate can be obtained by using the ink set according to the second embodiment of the disclosure. Specifically, for example, the first ink and the second ink are applied to the substrate, and then the inks are irradiated with active energy rays. In the first ink, since the total content of the bifunctional (meth)acrylate having a linear or branched alkylene group having 5 to 9 carbon atoms and the monofunctional (meth)acrylate having a hydroxy group with respect to the total amount of polymerizable compounds contained in the first ink is 80% by mass or more, both a low odor and water resistance can be achieved as described above. When cured products of the second ink are immersed in water with a pH of 7 or an alkaline aqueous solution with a pH of 10 for 5 minutes, the pencil hardness of the cured product immersed in the alkaline aqueous solution with a pH of 10 is lower than the pencil hardness of the cured product immersed in the water with a pH of 7. Therefore, the ink film can be easily peeled from the substrate using an alkaline aqueous solution. Specifically, the obtained image recorded article has good alkali peelability.

**In** JP2022-030775A, it is not assumed that the total content of the bifunctional (meth)acrylate having a linear or branched alkylene group having 5 to 9 carbon atoms and the monofunctional (meth)acrylate having a hydroxy group with respect to the total amount of the polymerizable compounds contained in the ink is 80% by mass or more.

Components contained in the ink according to the first embodiment of the disclosure will be described.

### [Active energy ray curable type ink jet ink]

The ink according to the first embodiment of the disclosure is an active energy ray curable type ink. Specifically, the ink according to the first embodiment of the disclosure is cured when irradiated with active energy rays. Examples of the active energy rays include γ rays, β rays, electron beams, UV rays, and visible light. In particular, the active energy rays are preferably UV rays. The ink according to the first embodiment of the disclosure is preferably a UV curable type ink.

### <Bifunctional (meth)acrylate having linear or branched alkylene group having 5 to 9 carbon atoms>

The ink according to the first embodiment of the disclosure contains the bifunctional (meth)acrylate having a linear or branched alkylene group having 5 to 9 carbon atoms (which is hereinafter referred to also as a "specific bifunctional (meth)acrylate").

The bifunctional (meth)acrylate means a compound having two (meth)acryloyloxy groups.

The specific bifunctional (meth)acrylate has a linear or branched alkylene group, and the number of carbon atoms in the alkylene group is 5 to 9. This tends to reduce the odor and the viscosity. Since the ink according to the first embodiment of the disclosure contains the specific bifunctional (meth)acrylate, the odor of the ink is low, and its viscosity is relatively low, so that the jettability of the ink is good.

Examples of the linear or branched alkylene group include a methyl group, an ethyl group, an i-propyl group, a n-butyl group, a t-butyl group, a heptyl group, and a nonyl group. From the above-described point of view, the number of carbon atoms in the linear or branched alkylene group is preferably 6 to 8 and more preferably 6.

From the viewpoint of ensuring low odor and low viscosity, the molecular weight of the specific bifunctional (meth)acrylate is preferably 240 to 280.

The ink may contain only one specific bifunctional (meth)acrylate or two or more specific bifunctional (meth)acrylates.

Examples of the specific bifunctional (meth)acrylate include 3-methyl-1,5-pentanediol di(meth)acrylate, neopentyl glycol di(meth)acrylate, 1,6-hexanediol diacrylate, 1,7-heptanediol diacrylate, 1,8-octanediol diacrylate, and 1,9-nonanediol di(meth)acrylate.

In particular, from the viewpoint of the jettability, the specific bifunctional (meth)acrylate is preferably at least one selected from the group consisting of 3-methyl-1,5-pentanediol di(meth)acrylate and 1,6-hexanediol diacrylate and more preferably 3-methyl-1,5-pentanediol di(meth)acrylate.

From the viewpoint of reducing the odor, the content of the specific bifunctional (meth)acrylate with respect to the total amount of the ink is preferably 10% by mass to 70% by mass and more preferably 20% by mass to 60% by mass.

### <Monofunctional (meth)acrylate having hydroxy group>

The ink according to the first embodiment of the disclosure contains the monofunctional (meth)acrylate having a hydroxy group (which is hereinafter referred to also as a "specific monofunctional (meth)acrylate").

The monofunctional (meth)acrylate means a compound having one (meth)acryloyloxy group.

The specific monofunctional (meth)acrylate plays a role in suppressing local accumulation of water in the ink film and improving the water resistance due to the presence of the hydroxy group. When the specific monofunctional (meth)acrylate is present, the concentration of oxygen in the ink is reduced, and inhibition of polymerization by oxygen is suppressed, so that the curability of the ink is improved. As a result, the amount of unreacted polymerizable compounds can be reduced, and the odor can be reduced.

The ink may contain only one specific monofunctional (meth)acrylate or two or more specific monofunctional (meth)acrylates.

No particular limitation is imposed on the number of hydroxy groups contained in the specific monofunctional (meth)acrylate, and the number of hydroxy groups is, for example, 1 to 6. From the viewpoint of the viscosity of the ink, the number of hydroxy groups is preferably 1 to 3 and more preferably 1 or 2.

From the viewpoint of ensuring low odor and low viscosity, the molecular weight of the specific monofunctional (meth)acrylate is preferably 130 to 150.

Examples of the specific monofunctional (meth)acrylate include 2-hydroxyethyl (meth)acrylate, 3-hydroxypropyl (meth)acrylate, 2-hydroxypropyl (meth)acrylate, 2-hydroxybutyl (meth)acrylate, 3-hydroxybutyl (meth)acrylate, and 4-hydroxybutyl (meth)acrylate. In particular, the specific monofunctional (meth)acrylate is preferably 4-hydroxybutyl (meth)acrylate from the viewpoint of ensuring water resistance and low odor.

From the viewpoint of ensuring water resistance and low odor, the content of the specific monofunctional (meth)acrylate with respect to the total amount of the ink is preferably 30% by mass to 70% by mass and more preferably 40% by mass to 50% by mass.

In the ink according to the first embodiment of the disclosure, the total content of the specific bifunctional (meth)acrylate and the specific monofunctional (meth)acrylate with respect to the total amount of polymerizable compounds contained in the ink is 80% by mass or more. The phrase "the total content of the specific bifunctional (meth)acrylate and the monofunctional (meth)acrylate is 80% by mass or more" means that the content of a polymerizable compound other than the specific bifunctional (meth)acrylate and the monofunctional (meth)acrylate in the ink is small. When the content of the polymerizable compound other than the specific bifunctional (meth)acrylate and the monofunctional (meth)acrylate (this polymerizable compound is hereinafter referred to also as an "additional polymerizable compound") is small, the effects of the low odor and water resistance based on the specific bifunctional (meth)acrylate and the specific monofunctional (meth)acrylate are exerted.

From the viewpoint of further enhancing the effects of the low odor and water resistance, the total content of the specific bifunctional (meth)acrylate and the specific monofunctional (meth)acrylate is preferably 90% by mass or more and more preferably 95% by mass or more. No particular limitation is imposed on the upper limit of the total content, and the total content may be 100% by mass. Specifically, the polymerizable compounds contained in the ink may include only the specific bifunctional (meth)acrylate and the specific monofunctional (meth)acrylate.

### - Specific bifunctional (meth)acrylate / specific monofunctional (meth)acrylate -

The ratio of the content mass of the specific bifunctional (meth)acrylate to the content mass of the specific monofunctional (meth)acrylate is preferably 0.3 to 3.5 and more preferably 0.5 to 1.3. When the mass ratio is 0.3 or more, the odor can be further reduced. When the mass ratio is 3.5 or less, the water resistance is further improved.

### <Additional polymerizable compound>

As described above, from the viewpoint of further enhancing the effects of the low odor and water resistance, it is preferable that the content of the additional polymerizable compound is low. However, the ink may contain the additional polymerizable compound so long as the effects of the disclosure are not significantly impaired.

No particular limitation is imposed on the additional polymerizable compound so long as it is a compound that has a polymerizable group and is other than the specific bifunctional (meth)acrylate and the monofunctional (meth)acrylate.

From the viewpoint of reactivity with the specific bifunctional (meth)acrylate and the monofunctional (meth)acrylate, the polymerizable group in the additional polymerizable compound is preferably a radically polymerizable group, more preferably an ethylenically unsaturated group, and still more preferably a (meth)acryloyloxy group. Specifically, the additional polymerizable compound is preferably a radically polymerizable compound, more preferably an ethylenically unsaturated compound, and still more preferably a (meth)acrylate.

The additional polymerizable compound may be a monofunctional polymerizable compound having one polymerizable group or a polyfunctional polymerizable compound having two or more polymerizable groups.

### - Monofunctional polymerizable compound -

Examples of the monofunctional polymerizable compound include monofunctional (meth)acrylates, monofunctional (meth)acrylamides, monofunctional aromatic vinyl compounds, monofunctional vinyl ethers, and monofunctional N-vinyl compounds.

Examples of the monofunctional (meth)acrylate include methyl (meth)acrylate, ethyl (meth)acrylate, propyl (meth)acrylate, n-butyl (meth)acrylate, hexyl (meth)acrylate, 2-ethylhexyl (meth)acrylate, tert-octyl (meth)acrylate, isoamyl (meth)acrylate, decyl (meth)acrylate, isodecyl (meth)acrylate, lauryl (meth)acrylate, stearyl (meth)acrylate, isostearyl (meth)acrylate, cyclohexyl (meth)acrylate, 4-n-butylcyclohexyl (meth)acrylate, 4-tert-butylcyclohexyl (meth)acrylate, bornyl (meth)acrylate, isobornyl (meth)acrylate, 2-ethylhexyl diglycol (meth)acrylate, butoxyethyl (meth)acrylate, 2-chloroethyl (meth)acrylate, 4-bromobutyl (meth)acrylate, cyanoethyl (meth)acrylate, benzyl (meth)acrylate, butoxymethyl (meth)acrylate, 3-methoxybutyl (meth)acrylate, 2-(2-methoxyethoxy)ethyl (meth)acrylate, 2-(2-butoxyethoxy)ethyl (meth)acrylate, 2,2,2-tetrafluoroethyl (meth)acrylate, 1H,1H,2H,2H-perfluorodecyl (meth)acrylate, 4-butylphenyl (meth)acrylate, phenyl (meth)acrylate, 2,4,5-tetramethylphenyl (meth)acrylate, 4-chlorophenyl (meth)acrylate, 2-phenoxymethyl (meth)acrylate, 2-phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, cyclic trimethylolpropane formal (meth)acrylate, phenyl glycidyl ether (meth)acrylate, dimethylaminoethyl (meth)acrylate, diethylaminoethyl (meth)acrylate, dimethylaminopropyl (meth)acrylate, diethylaminopropyl (meth)acrylate, trimethoxysilylpropyl (meth)acrylate, trimethylsilylpropyl (meth)acrylate, polyethylene oxide monomethyl ether (meth)acrylate, polyethylene oxide (meth)acrylate, polyethylene oxide monoalkyl ether (meth)acrylate, dipropylene glycol (meth)acrylate, polypropylene oxide monoalkyl ether (meth)acrylate, 2-methacryloyloxyethyl succinate, 2-methacryloyloxyhexahydrophthalic acid, ethoxydiethylene glycol (meth)acrylate, butoxydiethylene glycol (meth)acrylate, trifluoroethyl (meth)acrylate, perfluorooctyl ethyl (meth)acrylate, ethylene oxide (EO)-modified phenol (meth)acrylate, EO-modified cresol (meth)acrylate, EO-modified nonylphenol (meth)acrylate, propylene oxide (PO)-modified nonylphenol (meth)acrylate, EO-modified -2-ethylhexyl (meth)acrylate, dicyclopentenyl (meth)acrylate, dicyclopentenyloxyethyl (meth)acrylate, dicyclopentanyl (meth)acrylate, (3-ethyl-3-oxetanylmethyl) (meth)acrylate, phenoxyethylene glycol (meth)acrylate, 2-carboxyethyl (meth)acrylate, and 2-(meth)acryloyloxyethyl succinate.

Examples of the monofunctional (meth)acrylamide include (meth)acrylamide, N-methyl (meth)acrylamide, N-ethyl (meth)acrylamide, N-propyl (meth)acrylamide, N-n-butyl (meth)acrylamide, N-t-butyl (meth)acrylamide, N-butoxymethyl (meth)acrylamide, N-isopropyl (meth)acrylamide, N-methylol (meth)acrylamide, N,N-dimethyl (meth)acrylamide, N,N-diethyl (meth)acrylamide, and (meth)acryloylmorpholine.

Examples of the monofunctional aromatic vinyl compound include styrene, dimethylstyrene, trimethylstyrene, isopropyl styrene, chloromethylstyrene, methoxystyrene, acetoxystyrene, chlorostyrene, dichlorostyrene, bromostyrene, methyl vinyl benzoate, 3-methylstyrene, 4-methylstyrene, 3-ethylstyrene, 4-ethylstyrene, 3-propylstyrene, 4-propylstyrene, 3-butylstyrene, 4-butylstyrene, 3-hexylstyrene, 4-hexylstyrene, 3-octylstyrene, 4-octylstyrene, 3-(2-ethylhexyl)styrene, 4-(2-ethylhexyl)styrene, allylstyrene, isopropenylstyrene, butenylstyrene, octenylstyrene, 4-t-butoxycarbonylstyrene, and 4-t-butoxystyrene.

Examples of the monofunctional vinyl ether include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxy ethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethyl cyclohexyl methyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, and phenoxypolyethylene glycol vinyl ether.

Examples of the monofunctional N-vinyl compound include N-vinyl-ε-caprolactam and N-vinylpyrrolidone.

### - Polyfunctional polymerizable compound -

Examples of the polyfunctional polymerizable compound include polyfunctional (meth)acrylate compounds and polyfunctional vinyl ethers.

Examples of the polyfunctional (meth)acrylate include ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, tetraethylene glycol di(meth)acrylate, EO-modified neopentyl glycol di(meth)acrylate, PO-modified neopentyl glycol di(meth)acrylate, EO-modified hexanediol di(meth)acrylate, PO-modified hexanediol di(meth)acrylate, decanediol di(meth)acrylate, dodecanediol di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, tricyclodecane dimethanol di(meth)acrylate, trimethylolethane tri(meth)acrylate, trimethylolpropane tri(meth)acrylate, trimethylolpropane EO-added tri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, tri(meth)acryloyloxy ethoxytrimethylolpropane, glycerin polyglycidyl ether poly(meth)acrylate, and tris(2-acryloyloxyethyl)isocyanurate.

Examples of the polyfunctional vinyl ether include 1,4-butanediol divinyl ether, ethylene glycol divinyl ether, diethylene glycol divinyl ether, triethylene glycol divinyl ether, polyethylene glycol divinyl ether, propylene glycol divinyl ether, butylene glycol divinyl ether, hexanediol divinyl ether, 1,4-cyclohexanedimethanol divinyl ether, bisphenol A alkylene oxide divinyl ether, bisphenol F alkylene oxide divinyl ether, trimethylolethane trivinyl ether, trimethylolpropane trivinyl ether, ditrimethylolpropane tetravinyl ether, glycerin trivinyl ether, pentaerythritol tetravinyl ether, dipentaerythritol pentavinyl ether, dipentaerythritol hexavinyl ether, EO-added trimethylolpropane trivinyl ether, PO-added trimethylolpropane trivinyl ether, EO-added ditrimethylolpropane tetravinyl ether, PO-added ditrimethylolpropane tetravinyl ether, EO-added pentaerythritol tetravinyl ether, PO-added pentaerythritol tetravinyl ether, EO-added dipentaerythritol hexavinyl ether, and PO-added dipentaerythritol hexavinyl ether.

### <Coloring agent>

The ink according to the first embodiment of the disclosure contains at least one coloring agent.

Examples of the coloring agent include dyes and pigments. From the viewpoint of durability such as heat resistance, light resistance, and water resistance, the coloring agent is preferably a pigment.

When the coloring agent used is a pigment, the pigment may be contained as a pigment dispersion in the ink. The pigment dispersion is a liquid obtained by dispersing the pigment in a liquid medium using a dispersing agent and contains at least the pigment, the dispersing agent, and the liquid medium. The details of the dispersing agent will be descried later. The liquid medium may be an organic solvent or may be a polymerizable compound.

The pigment used may be any commercially available organic or inorganic pigment. Examples of the pigment include pigments described in "Ganryo no Jiten (Dictionary of Pigments)" ed. by Seishiro Ito (2000), W. Herbst and K. Hunger "Industrial Organic Pigments," JP2002-12607A, JP2002-188025A, JP2003-26978A, and JP2003-342503A.

When the ink contains the coloring agent, the content of the coloring agent with respect to the total amount of the ink is preferably 0.5% by mass to 15% by mass, more preferably 1% by mass to 10% by mass, and still more preferably 2% by mass to 5% by mass.

### <Dispersing agent>

When the coloring agent used is a pigment, the pigment may be contained as a pigment dispersion in the ink. The pigment can be dispersed in the liquid medium using a dispersing agent. Any well-known dispersing agent may be used. From the viewpoint of dispersion stability, the dispersing agent is preferably a compound having both a hydrophilic structure and a hydrophobic structure.

Examples of the dispersing agent include low-molecular weight dispersing agents having a molecular weight of less than 1000 such as higher fatty acid salts, alkyl sulfates, alkyl ester sulfates, alkyl sulfonates, sulfosuccinates, naphthalenesulfonates, alkyl phosphates, polyoxyalkylene alkyl ether phosphates, polyoxyalkylene alkyl phenyl ethers, polyoxyethylene polyoxypropylene glycols, glycerin fatty acid esters, sorbitan fatty acid esters, polyoxyethylene fatty acid amides, and amine oxides.

Other examples of the dispersing agent include a high-molecular weight dispersing agent having a molecular weight of 1000 or more and obtained by copolymerizing a hydrophilic monomer and a hydrophobic monomer. From the viewpoint of dispersion stability, the hydrophilic monomer is preferably a dissociable group-containing monomer and preferably a dissociable group-containing monomer having a dissociable group and an ethylenically unsaturated bond. Examples of the dissociable group-containing monomer include carboxy group-containing monomers, sulfonic acid group-containing monomers, and phosphate group-containing monomers. From the viewpoint of dispersion stability, the hydrophobic monomer is preferably an aromatic group-containing monomer having an aromatic group and an ethylenically unsaturated bond or an aliphatic hydrocarbon group-containing monomer having an aliphatic hydrocarbon group and an ethylenically unsaturated bond. The polymer may be a random copolymer or may be a block copolymer.

The dispersing agent may be a commercial product. Examples of the commercial product include:
DISPERBYK-101, DISPERBYK-102, DISPERBYK-103, DISPERBYK-106, DISPERBYK-110, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (manufactured by BYK-Chemie); and
SOLSPERSE 3000, SOLSPERSE 5000, SOLSPERSE 9000, SOLSPERSE 12000, SOLSPERSE 13240, SOLSPERSE 13940, SOLSPERSE 17000, SOLSPERSE 22000, SOLSPERSE 24000, SOLSPERSE 26000, SOLSPERSE 28000, SOLSPERSE 32000, SOLSPERSE 36000, SOLSPERSE 39000, SOLSPERSE 41000, and SOLSPERSE 71000 (manufactured by Lubrizol).

A dispersing device used to disperse the pigment may be any well-known dispersing device, and examples thereof include a ball mill, a sand mill, a bead mill, a roll mill, a jet mill, a paint shaker, an attritor, an ultrasonic disperser, and a disperser.

From the viewpoint of dispersion stability, the mass ratio of the dispersing agent with respect to the mass of the pigment in the ink is preferably 0.05 to 1.0 and more preferably 0.1 to 0.5.

### <Polymerization initiator>

The ink according to the first embodiment of the disclosure may contain at least one polymerization initiator. The polymerization initiator is preferably a radical polymerization initiator that generates radicals.

Examples of the radical polymerization initiator include alkylphenone compounds, acylphosphine compounds, aromatic onium salt compounds, organic peroxides, thio compounds, hexaarylbiimidazole compounds, ketoxime ester compounds, borate compounds, azinium compounds, metallocene compounds, active ester compounds, compounds having a carbon-halogen bond, and alkylamine compounds.

In particular, the polymerization initiator is preferably at least one selected from the group consisting of acylphosphine compounds and thio compounds, more preferably at least one selected from the group consisting of acylphosphine oxide compounds and thioxanthone compounds, and still more preferably a combination of an acylphosphine oxide compound and a thioxanthone compound.

Examples of the acylphosphine oxide compound include monoacylphosphine oxide compounds and bisacylphosphine oxide compounds.

Examples of the monoacylphosphine oxide compound include isobutyryldiphenylphosphine oxide, 2-ethylhexanoyldiphenylphosphine oxide, 2,4,6-trimethylbenzoyldiphenylphosphine oxide, (2,4,6-trimethylbenzoyl)ethoxyphenylphosphine oxide, o-toluyldiphenylphosphine oxide, p-t-butylbenzoyldiphenylphosphine oxide, 3-pyridylcarbonyldiphenylphosphine oxide, acryloyldiphenylphosphine oxide, benzoyldiphenylphosphine oxide, pivaloylphenylphosphinic acid vinyl ester, adipoylbisdiphenylphosphine oxide, pivaloyldiphenylphosphine oxide, p-toluyldiphenylphosphine oxide, 4-(t-butyl)benzoyldiphenylphosphine oxide, terephthaloylbisdiphenylphosphine oxide, 2-methylbenzoyldiphenylphosphine oxide, versatoyldiphenylphosphine oxide, 2-methyl-2-ethylhexanoyldiphenylphosphine oxide, 1-methyl-cyclohexanoyldiphenylphosphine oxide, pivaloylphenylphosphinic acid methyl ester, and pivaloylphenylphosphinic acid isopropyl ester.

Examples of the bisacylphosphine oxide compound include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, phenylbis(2,4,6-trimethylbenzoyl)phosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Examples of the thioxanthone compound include thioxanthone, 2-isopropylthioxanthone, 4-isopropylthioxanthone, 2-chlorothioxanthone, 2,4-dichlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, n-allylthioxanthone-3,4-dicarboximide, n-octylthioxanthone-3,4-dicarboximide, N-(1,1,3,3-tetramethylbutyl)thioxanthone-3,4-dicarboximide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9H-thioxanthon-2-yloxy)-N,N,N-trimethyl-1-propanaminium chloride.

The thioxanthone compound may be a commercial product. Examples of the commercial product include the SPEEDCURE series (such as SPEEDCURE 7010, SPEEDCURE CPTX, and SPEEDCURE ITX) manufactured by Lambson.

From the viewpoint of further reducing the odor, it is preferable that the ink according to the first embodiment of the disclosure contains, as a polymerization initiator, at least one selected from the group consisting of phenylbis(2,4,6-trimethylbenzoyl)phosphine oxide and (2,4,6-trimethylbenzoyl)ethoxyphenylphosphine oxide, and it is more preferable that the ink contains, as polymerization initiators, phenylbis(2,4,6-trimethylbenzoyl)phosphine oxide and (2,4,6-trimethylbenzoyl)ethoxyphenylphosphine oxide.

From the viewpoint of further reducing the odor, the total content of at least one selected from the group consisting of phenylbis(2,4,6-trimethylbenzoyl)phosphine oxide and (2,4,6-trimethylbenzoyl)ethoxyphenylphosphine oxide (preferably the total content of phenylbis(2,4,6-trimethylbenzoyl)phosphine oxide and (2,4,6-trimethylbenzoyl)ethoxyphenylphosphine oxide) with respect to the total amount of the ink is preferably 3.5% by mass or more and more preferably 5% by mass or more. No particular limitation is imposed on the upper limit of the total content, but the upper limit is, for example, 10% by mass.

From the viewpoint of further reducing the odor, it is preferable that the ink according to the first embodiment of the disclosure contains, as a polymerization initiator, a compound having two or more thioxanthone skeletons in its molecule.

The content of the compound having two or more thioxanthone skeletons in its molecule with respect to the total amount of the ink is preferably 1% by mass to 10% by mass and more preferably 2% by mass to 8% by mass.

### <Polymerization inhibitor>

Preferably, the ink according to the first embodiment of the disclosure contains at least one polymerization inhibitor.

Examples of the polymerization inhibitor include hydroquinone compounds, phenothiazine, catechol, alkylphenols, alkylbisphenols, zinc dimethyldithiocarbamate, copper dimethyldithiocarbamate, copper dibutyldithiocarbamate, copper salicylate, thiodipropionates, mercaptobenzimidazole, phosphites, nitrosamine compounds, hindered amine compounds, and nitroxyl radicals.

In particular, the polymerization inhibitor is more preferably a nitrosamine compound.

Examples of the nitrosamine compound include an N-nitroso-N-phenylhydroxylamine aluminum salt and N-nitroso-N-phenylhydroxylamine. In particular, the nitrosamine compound is preferably an N-nitroso-N-phenylhydroxylamine aluminum salt.

From the viewpoint of improving the temporal stability of the ink, the content of the polymerization inhibitor with respect to the total amount of the ink is preferably 0.05% by mass to 1% by mass.

### <Surfactant>

Preferably, the ink according to the first embodiment of the disclosure contains at least one surfactant. No particular limitation is imposed on the type of surfactant, and the surfactant may be an anionic surfactant, a cationic surfactant, or a nonionic surfactant.

In particular, from the viewpoint of further reducing the odor, the surfactant is preferably a surfactant having a polymerizable group (which is hereinafter referred to as a "polymerizable surfactant").

The polymerizable group in the polymerizable surfactant is preferably a radically polymerizable group from the viewpoint of curability. The radically polymerizable group is preferably an ethylenically unsaturated group from the viewpoint of curability. In particular, the polymerizable group in the polymerizable surfactant is preferably a vinyl group or a (meth)acryloyl group and more preferably a (meth)acryloyl group.

From the viewpoint of image quality, the number of polymerizable groups in the polymerizable surfactant is 2 or more and more preferably 3 or more. No particular limitation is imposed on the upper limit of the number of polymerizable groups in the polymerizable surfactant. From the viewpoint of j ettability when the ink is jetted by the ink jet recording method, the upper limit is, for example, 5.

Specifically, as for the type and number of polymerizable groups, the polymerizable surfactant is preferably a surfactant having two or more (meth)acryloyl groups and more preferably a surfactant having three or more (meth)acryloyl groups.

Examples of the polymerizable surfactant include polymerizable silicone-based surfactants, polymerizable fluorine-based surfactants, and polymerizable acrylic-based surfactants.

Examples of the polymerizable silicone-based surfactant include compounds in which polymerizable groups are bonded to the main chain or side chains of polyether-modified dimethylsiloxane.

Examples of commercial products of the polymerizable silicone-based surfactant include silicone-based surfactants having a (meth)acryloyl group such as: BYK-UV3500, 3505, 3530, 3570, 3575, and 3576 (manufactured by BYK); Tegorad 2100, 2200, 2250, 2300, 2500, 2600, 2700, 2800, 2010, and 2011 (manufactured by EVONIK); EBECRYL 350 and 1360 (manufactured by DAICEL-ALLNEX LTD.); and KP-410, 411, 412, 413, 414, 415, 416, 418, 420, 422, and 423 (manufactured by Shin-Etsu Silicone).

Examples of the polymerizable fluorine-based surfactant include compounds having a perfluoroalkyl group and a polymerizable group.

Examples of commercial products of the polymerizable fluorine-based surfactant include fluorine-based surfactants having a (meth)acryloyl group such as MEGAFACE RS-56, RS-72-K, RS-75, RS-76-E, RS-65-NS, RS-78, and RS-90 (manufactured by DIC Corporation).

Examples of the polymerizable acrylic-based surfactant include compounds in which polymerizable groups are bonded to side chains of a poly(meth)acrylic structure.

Examples of commercial products of the polymerizable acrylic-based surfactant include CN821 (manufactured by Sartomer).

The surfactant is preferably a polymerizable silicone-based surfactant and more preferably a silicone-based surfactant having a (meth)acryloyl group.

The content of the surfactant with respect to the total amount of the ink is preferably 1% by mass to 20% by mass and more preferably 5% by mass to 15% by mass.

### <Additives>

The ink according to the first embodiment of the disclosure may optionally contain additives such as a co-sensitizer, an ultraviolet absorbent, an antioxidant, a fading inhibitor, an electroconductive salt, a solvent, and a basic compound.

### <Physical properties>

The viscosity of the ink is preferably 0.5 mPa·s to 50 mPa·s, more preferably 5 mPa·s to 40 mPa·s, still more preferably 7 mPa·s to 35 mPa·s, and yet more preferably 8 mPa·s to 30 mPa·s. The varicosity is measured at 25°C using a viscometer and is measured using, for example, a TV-22 type viscometer manufactured by Toki Sangyo Co., Ltd.

The surface tension of the ink is preferably 60 mN/m or less, more preferably 20 mN/m to 50 mN/m, and still more preferably 25 mN/m to 45 mN/m.

### [Active energy ray curable type ink set]

The ink set according to the second embodiment of the disclosure includes: a first ink containing the specific bifunctional (meth)acrylate, the specific monofunctional (meth)acrylate, and the coloring agent; and a second ink.

In the first ink, the total content of the specific bifunctional (meth)acrylate and the specific monofunctional (meth)acrylate with respect to the total amount of polymerizable compounds contained in the first ink is 80% by mass or more.

The first ink is the same as the ink according to the first embodiment of the disclosure, and therefore a description thereof will be omitted. The details of the second ink will next be described.

When cured products of the second ink are immersed in water with a pH of 7 or an alkaline aqueous solution with a pH of 10 for 5 minutes, the pencil hardness of the cured product immersed in the alkaline aqueous solution with a pH of 10 is lower than the pencil hardness of the cured product immersed in the water with a pH of 7.

Each cured product of the second ink is produced under the following conditions.

The second ink is applied to a plastic sheet substrate (polyethylene terephthalate substrate, thickness: 12 µm, "Taiko PET" manufactured by Futamura Chemical Co., Ltd.) using an ink jet recording apparatus (product name: "Cylinder JET" manufactured by Tritek Co., Ltd.) and an ink jet head (product name: "KM1800i" manufactured by KONICA MINOLTA, INC.) to record a 100% solid image with a thickness of 6 µm under the conditions of an ink droplet amount of 10.5 pL (picoliters) and a resolution of 600 × 600 dpi (dot per inch). After the application of the first ink, the second ink is irradiated with UV rays at an exposure of 10 mJ/cm² using an LED light source included with the ink jet recording apparatus. The LED light source used is a UV-LED irradiator (product name: "G4B" manufactured by KYOCERA Corporation) with a peak wavelength of 385 nm. Then the second ink is irradiated with UV rays at an exposure of 500 mJ/cm² using the LED light source in an atmosphere with an oxygen concentration of 1% by volume to cure the ink, and a cured product is thereby obtained.

The pencil hardness is obtained as follows. Cured products of the second ink are immersed in water with a pH of 7 or an alkaline aqueous solution with a pH of 10 for 5 minutes, and then a pencil hardness test is performed under the conditions specified in JIS K 5600 5-4(1999). The pencil hardness is represented by one of 6B, 5B, 4B, 3B, 2B, B, HB, F, H, 2H, 3H, 4H, 5H, 6H, 7H, 8H, and 9H in increasing order of hardness.

The phrase "the pencil hardness of the cured product immersed in the alkaline aqueous solution with a pH of 10 is lower than the pencil hardness of the cured product immersed in the water with a pH of 7" means that the pencil hardness of the former is at least one level lower than the pencil hardness of the later.

From the viewpoint of improving the alkali peelability, the pencil hardness of the cured product immersed in the alkaline aqueous solution with a pH of 10 is preferably at least three levels lower than the pencil hardness of the cured product immersed in the water with a pH of 7 and more preferably at least 5 levels lower.

From the viewpoint of improving the alkali peelability and ensuring safety simultaneously, it is preferable that the second ink contains at least one acid group-containing compound selected from the group consisting of acid group-containing polymerizable monomers and acid group-containing polymers and that the total content of the at least one acid group-containing compound with respect to the total amount of the second ink is 8% by mass or more.

From the viewpoint of improving the alkali peelability and ensuring safety and low odor, it is preferable that the second ink contains the specific bifunctional (meth)acrylate, the specific monofunctional (meth)acrylate, and at least one acid group-containing compound selected from the group consisting of acid group-containing polymerizable monomers and acid group-containing polymers.

### <Acid group-containing compound>

Preferably, the second ink contains the acid group-containing compound.

When the acid group reacts with an alkali to form a salt, the water solubility of the ink increases. Therefore, when the ink contains the acid group-containing compound, the alkali peelability is improved.

Examples of the acid group in the acid group-containing compound include a carboxy group, a sulfo group, a phosphonic acid group, a phosphoric acid group, and a sulfonamido group.

### - Acid group-containing polymerizable monomer -

In the present disclosure, the term "monomer" means a compound having a molecular weight of less than 1000. The term "polymerizable monomer" means a compound having a molecular weight of less than 1000 and having a polymerizable group. The molecular weight of a monomer can be computed based on the types and numbers of atoms forming the monomer.

Examples of the polymerizable monomer having a carboxy group include 2-(meth)acryloyloxyethylsuccinic acid, 2-(meth)acryloyloxyethyl phthalic acid, 2-(meth)acryloyloxyethylhexahydrophthalic acid, 2-(meth)acryloyloxypropylphthalic acid, 2-(meth)acryloyloxypropylhexahydrophthalic acid, 2-carboxyethyl (meth)acrylate, and (meth)acrylic acid.

Examples of the polymerizable monomer having a sulfo group include 2-hydroxy-3-sulfopropyl (meth)acrylate, 2-(meth)acrylamide-2-methylpropane sulfonic acid, 2-sulfoethyl (meth)acrylate, 3-sulfopropyl (meth)acrylate, and 4-styrene sulfonic acid.

Examples of the polymerizable monomer having a phosphoric acid group include 2-phosphonooxyethyl (meth)acrylate and 2-(meth)acryloyloxyethyl acid phosphate.

In particular, from the viewpoint of improving the alkali peelability and ensuring safety and low viscosity, the acid group-containing polymerizable monomer is preferably a polymerizable monomer having a carboxy group.

The acid group-containing polymerizable monomer may be a monofunctional polymerizable monomer having an acid group or a polyfunctional polymerizable monomer having an acid group. From the viewpoint of improving the alkali peelability and ensuring safety and low viscosity, the acid group-containing polymerizable monomer is preferably a monofunctional polymerizable monomer having an acid group, more preferably a monofunctional polymerizable monomer having a carboxy group, and still more preferably a monofunctional (meth)acrylate having a carboxy group.

### - Acid group-containing polymer -

In the present disclosure, the term "polymer" means a compound having a weight average molecular weight of 1000 or more.

Examples of the acid group-containing polymer include (meth)acrylic-based copolymers, polyurethanes, polyvinyl alcohols, polyvinyl butyrals, polyvinyl formals, polyamides, polyesters, and epoxy resins. **In** particular, the acid group-containing polymer is preferably a (meth)acrylic-based copolymer, polyurethane, or polyvinyl butyral.

**In** the present disclosure, the term "(meth)acrylic-based copolymer" refers to a copolymer including, as a structural unit, a (meth)acrylic acid derivative such as (meth)acrylic acid, a (meth)acrylate (such as an alkyl (meth)acrylate, an aryl (meth)acrylate, or an allyl (meth)acrylate), (meth)acrylamide, or a (meth)acrylamide derivative. The term "polyurethane" refers to a polymer obtained by a condensation reaction of a polyfunctional isocyanate compound having two or more isocyanate groups and a polyhydric alcohol having two or more hydroxy groups. The term "polyvinyl butyral" refers to a polymer obtained by reacting a polyvinyl alcohol obtained by partial or complete saponification of polyvinyl acetate with butyraldehyde under acidic conditions. The term "polyvinyl butyral" encompasses a polymer having a functional group introduced into its molecule.

Preferably, the (meth)acrylic-based copolymer includes a structural unit having an acid group. **In** particular, the acid group is preferably a carboxy group. Examples of the structural unit having a carboxy group include a structural unit derived from (meth)acrylic acid and a structural unit derived from a structural unit represented by the following formula (1).

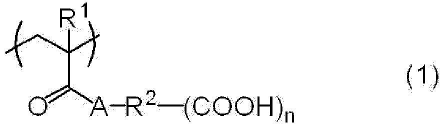

In formula 1, R¹ represents a hydrogen atom or a methyl group, and R² represents a single bond or an n+1 valent linking group. A represents an oxygen atom or -NR³-, and R³ represents a hydrogen atom or a monovalent hydrocarbon group having 1 to 10 carbon atoms. n represents an integer of 1 to 5.

For preferred modes and specific examples of the structural unit represented by formula 1 and preferred modes of structural units other than the structural unit represented by formula 1, reference can be made to Japanese Patent No. 4668111 and Japanese Patent No. 5588887.

In particular, it is preferable that the acid group-containing polymer includes a structural unit derived from (meth)acrylic acid and a structural unit derived from an alkyl (meth)acrylate. The number of carbon atoms in the alkyl group included in the alkyl (meth)acrylate is preferably 1 to 10 and more preferably 1 to 6.

The weight average molecular weight of the acid group-containing polymer is preferably 1,000 to 1,000,000, more preferably 5,000 to 500,000, and still more preferably 10,000 to 200,000. The weight average molecular weight is a value measured by gel permeation chromatography (GPC). In the measurement by the gel permeation chromatography (GPC), HLC (registered trademark)-8020GPC (manufactured by TOSOH Corporation) is used as a measurement device, and the columns used are three TSKgel (registered trademark) Super Multipore HZ-H columns (manufactured by TOSOH Corporation, 4.6 mm ID × 15 cm). The eluant used is THF (tetrahydrofuran). In the measurement, the concentration of a sample is set to 0.45% by mass, and the flow rate is set to 0.35 mL/min. The injection amount of the sample is set to 10 µL, and the measurement temperature is set to 40°C. The measurement is performed using an RI detector. A calibration curve is produced using 8 samples of "F-40", "F-20", "F-4", "F-1", "A-5000", "A-2500", "A-1000", and "n-propylbenzene" which are "Standard Samples TSK standard, polystyrene" (manufactured by TOSOH Corporation).

From the viewpoint of further improving the alkali peelability, the total content of the acid group-containing compounds with respect to the total amount of the second ink is preferably 8% by mass or more, more preferably 10% by mass or more, and still more preferably 14% by mass or more. The upper limit of the total content is, for example, 20% by mass.

### <Bifunctional (meth)acrylate having linear or branched alkylene group having 5 to 9 carbon atoms>

Preferably, the second ink contains the specific bifunctional (meth)acrylate. Preferred modes of the specific bifunctional (meth)acrylate contained in the second ink are the same as the preferred modes of the specific bifunctional (meth)acrylate contained in the ink according to the first embodiment of the disclosure.

### <Monofunctional (meth)acrylate having hydroxy group>

Preferably, the second ink contains the specific monofunctional (meth)acrylate. Preferred modes of the specific monofunctional (meth)acrylate contained in the second ink are the same as the preferred modes of the specific monofunctional (meth)acrylate contained in the ink according to the first embodiment of the disclosure.

From the viewpoint of ensuring low odor, water resistance, and alkali peelability simultaneously, the total content of the acid group-containing polymerizable monomer, the specific bifunctional (meth)acrylate, and the specific monofunctional (meth)acrylate with respect to the total amount of polymerizable compounds contained in the second ink is preferably 40% by mass or more.

When the content of a polymerizable compound other than the acid group-containing compound, the specific bifunctional (meth)acrylate, and the monofunctional (meth)acrylate (this polymerizable compound is hereinafter referred to also as an "additional polymerizable compound A") is small, the effects of the alkali peelability, low odor, and water resistance based on the acid group-containing compound, the specific bifunctional (meth)acrylate, and the specific monofunctional (meth)acrylate are exerted more effectively.

From the viewpoint of exerting the effects of the alkali peelability, low odor, and water resistance more effectively, the total content of the acid group-containing polymerizable monomer, the specific bifunctional (meth)acrylate, and the specific monofunctional (meth)acrylate is preferably 70% by mass or more and more preferably 90% by mass or more. No particular limitation is imposed on the upper limit of the total content, and the total content may be 100% by mass. Specifically, the polymerizable compounds contained in the second ink include only the acid group-containing polymerizable monomer, the specific bifunctional (meth)acrylate, and the specific monofunctional (meth)acrylate.

### <Additional polymerizable compound A>

As described above, from the viewpoint of exerting the effects of the alkali peelability, low odor, and water resistance more effectively, it is preferable that the content of the additional polymerizable compound A is small. However, the second ink may contain the additional polymerizable compound A.

Examples of the additional polymerizable compound A contained in the second ink are the same as those of the additional polymerizable compound contained in the ink according to the first embodiment of the disclosure.

### <Polymerization initiator>

The second ink may contain at least one polymerization initiator.

Examples of the polymerization initiator contained in the second ink are the same as those of the polymerization initiator contained in the ink according to the first embodiment of the disclosure.

From the viewpoint of further reducing the odor, it is preferable that the second ink contains, as a polymerization initiator, at least one selected from the group consisting of phenylbis(2,4,6-trimethylbenzoyl)phosphine oxide and (2,4,6-trimethylbenzoyl)ethoxyphenylphosphine oxide, and it is more preferable that the second ink contains phenylbis(2,4,6-trimethylbenzoyl)phosphine oxide and (2,4,6-trimethylbenzoyl)ethoxyphenylphosphine oxide.

From the viewpoint of further reducing the odor, the total content of the at least one selected from the group consisting of phenylbis(2,4,6-trimethylbenzoyl)phosphine oxide and (2,4,6-trimethylbenzoyl)ethoxyphenylphosphine oxide (preferably the total content of phenylbis(2,4,6-trimethylbenzoyl)phosphine oxide and (2,4,6-trimethylbenzoyl)ethoxyphenylphosphine oxide) with respect to the total amount of the second ink is preferably 2% by mass or more and more preferably 3% by mass or more. No particular limitation is imposed on the upper limit of the total content, but the total content is, for example, 10% by mass.

From the viewpoint of further reducing the odor, it is preferable that the second ink contains, as a polymerization initiator, a compound having two or more thioxanthone skeletons in its molecule.

The content of the compound having two or more thioxanthone skeletons in its molecule with respect to the total amount of the second ink is preferably 0.02% by mass to 1% by mass and more preferably 0.05% by mass to 0.5% by mass.

### <Polymerization inhibitor>

Preferably, the second ink contains at least one polymerization inhibitor.

Examples of the polymerization inhibitor contained in the second ink are the same as those of the polymerization inhibitor contained in the ink according to the first embodiment of the disclosure.

From the viewpoint of improving the temporal stability of the second ink, the content of the polymerization inhibitor with respect to the total amount of the second ink is preferably 0.05% by mass to 0.5% by mass.

### <Surfactant>

Preferably, the second ink contains at least one surfactant.

Examples of the surfactant contained in the second ink are the same as those of the surfactant contained in the ink according to the first embodiment of the disclosure.

In particular, from the viewpoint of reducing the odor, it is preferable that the surfactant contained in the second ink is a polymerizable surfactant.

The content of the surfactant with respect to the total amount of the second ink is preferably 1% by mass to 20% by mass and more preferably 5% by mass to 15% by mass.

### <Additives>

The second ink may optionally contain additives such as a co-sensitizer, an ultraviolet absorbent, an antioxidant, a fading inhibitor, an electroconductive salt, a solvent, and a basic compound.

Preferably, the second ink contains no coloring agent. As described later, it is preferable that the second ink is applied directly to the substrate before the application of the first ink. Preferably, the second ink serves as a primer for allowing an image recorded by the first ink containing the coloring agent to be peeled off by an alkali.

### <Physical properties>

The viscosities of the first and second inks are each preferably 0.5 mPa·s to 50 mPa·s, more preferably 5 mPa·s to 40 mPa·s, still more preferably 7 mPa·s to 35 mPa·s, and particularly preferably 8 mPa·s to 30 mPa·s. The viscosity is measured at 25°C using a viscometer and is measured using, for example, a TV-22 type viscometer manufactured by Toki Sangyo Co., Ltd.

The surface tension of the first ink is preferably 60 mN/m or less, more preferably 20 mN/m to 30 mN/m, and still more preferably 20 mN/m to 25 mN/m.

The surface tension of the second ink is preferably 60 mN/m or less, more preferably 20 mN/m to 40 mN/m, and still more preferably 23 mN/m to 30 mN/m.

Preferably, the surface tension of the second ink is higher than the surface tension of the first ink.

As described later, no particular limitation is imposed on the order in which the first and second inks are applied to the substrate. However, from the viewpoint of alkali peelability and adhesiveness to the substrate, it is preferable that the second ink and then the first ink are applied to the substrate. When the second ink and the first ink are applied in this order to the substrate, if the surface tension of the second ink is higher than the surface tension of the first ink (in other words, the surface tension of the first ink is lower than the surface tension of the second ink), the ink droplets of the first ink can spread easily, and the image quality is improved.

### [Image recording method A]

An image recording method A according to an embodiment of the disclosure includes the steps of: applying the ink (the ink according to the first embodiment of the disclosure) to a substrate using an ink jet recording method; and irradiating the applied ink with active energy rays.

### (Step of applying ink using ink jet recording method)

No particular limitation is imposed on the type of substrate, and the substrate used may be any well-known substrate. Examples of the substrate include glass, quartz, and plastic films. Examples of the resin forming the plastic film include cellulose diacetate, cellulose triacetate, cellulose propionate, cellulose butyrate, cellulose acetate butyrate, cellulose nitrate, acrylic resins, chlorinated polyolefin resins, polyether sulfone resins, polyethylene terephthalate (PET), polyethylene naphthalate, nylon, polyethylene, polystyrene, polypropylene, polycycloolefin resins, polyimide resins, polycarbonate resins, and polyvinyl acetal. The plastic film may be a film containing only one of these resins or may be a film formed of a mixture of two or more of these resins.

No particular limitation is imposed on the thickness of the substrate, and the thickness is, for example, 1 µm to 10 mm. When the substrate is a film, its thickness is preferably 1 µm to 500 µm, more preferably 2 µm to 200 µm, still more preferably 5 µm to 100 µm, and particularly preferably 10 µm to 90 µm. When the substrate is glass, its thickness is preferably 0.1 mm to 10 mm, more preferably 0.15 mm to 8 mm, and still more preferably 0.2 mm to 5 mm.

The substrate may be a beverage container.

No particular limitation is imposed on the material of the beverage container, and examples of the material include glass and plastics. In particular, the beverage container is preferably a plastic container and is preferably a PET bottle containing polyethylene terephthalate as a main component.

The substrate may be a plastic film to be applied to the surface of a beverage container. The substrate may be subjected to hydrophilization treatment. Examples of the hydrophilization treatment include, but are not limited to, corona treatment, plasma treatment, heat treatment, abrasion treatment, light irradiation treatment (such as UV treatment), and flame treatment. The corona treatment can be performed, for example, using Corona Master (product name: "PS-10S" manufactured by Shinko Electric & Instrumentation Co., Ltd.). The conditions for the corona treatment may be selected according to the type of substrate etc.

No particular limitation is imposed on the ink jet recording method so long as it is a method capable of recording an image, and any known method can be used. Examples of the ink jet recording method include: a charge control method in which an ink is jetted by utilizing electrostatic attraction force; a drop-on-demand method (pressure pulse method) that utilizes the vibration pressure of a piezoelectric element; an acoustic ink jet method including converting an electric signal to an acoustic beam, irradiating an ink with the acoustic beam, and jetting the ink by utilizing the radiation pressure; and a thermal ink jet (BUBBLEJET (registered trademark)) method including heating an ink to form air bubbles and utilizing the pressure generated.

Examples of the type of ink jet head used for the ink jet recording method include: a shuttle type in which a short serial head is used and the recording is performed while the head is moved in the width direction of the substrate; and a line type that uses a line head including recording elements arranged so as to cover the entire region of a side of the substrate.

With the line type, the substrate is moved in a direction intersecting the arrangement direction of the recording elements, so that a pattern can be formed over the entire substrate. Therefore, a transport system such as a carriage for moving a short head can be eliminated. With the line type, it is unnecessary to move the carriage and perform complicated scanning control of the substrate, and only the substrate is moved, so that the recording speed can be higher than that of the shuttle type.

The amount of an ink droplet jetted from the ink jet head is preferably 1 pL (picoliter) to 100 pL, more preferably 3 pL to 80 pL, and still more preferably 3 pL to 50 pL.

### (Step of irradiating applied ink with active energy rays)

Examples of the active energy rays include γ rays, β rays, electron beams, UV rays, and visible light. In particular, the active energy rays are preferably UV rays.

The peak wavelength of the UV rays is preferably 200 nm to 405 nm, more preferably 250 nm to 400 nm, and still more preferably 300 nm to 400 nm.

A mercury lamp and various lasers such as gas lasers and solid lasers are mainly used as the light source for UV irradiation, and discharge lamps such as a mercury lamp, a metal halide lamp, and a UV fluorescent lamp are well-known. Semiconductor light sources such as UV-LEDs (UV light emitting diodes) and UV-LDs (UV laser diodes) are expected to be the light source for UV irradiation due to their small size, long lifetime, high efficiency, and low cost. In particular, the light source for UV irradiation is preferably a metal halide lamp, a high-pressure mercury lamp, a medium-pressure mercury lamp, a low-pressure mercury lamp, or a UV-LED.

In the present disclosure, polymerization of only part of the polymerizable monomers in an ink is referred to as "pre-curing," and irradiation with active energy rays for pre-curing is referred to as "pinning exposure."

In the present disclosure, polymerization of substantially all the polymerizable compounds in an ink is referred to also as "final curing," and irradiation with active energy rays for final curing is referred to also as "final exposure."

In the step of irradiating with active energy rays, it is preferable that the ink is first pre-cured and then final-cured. Specifically, it is preferable that, after the application of the ink, the ink is subjected to pinning exposure and is finally subjected to final exposure.

The reaction rate of the ink after pinning exposure is preferably 10% to 80%.

The reaction rate of the ink is the polymerization rate of the polymerizable compounds contained in the ink that is determined by high-performance liquid chromatography.

When the reaction rate of the ink is 10% or more, insufficient spreading of dots is prevented, and therefore the graininess of the final image is improved.

When the reaction rate of the ink is 80% or less, droplet interference between ink dots is reduced, and therefore the quality of the final image is improved.

From the viewpoint of further improving the graininess of the final image, the reaction rate of the ink is preferably 15% or more.

From the viewpoint of further improving the quality of the final image, the reaction rate of the ink is preferably 75% or less, more preferably 50% or less, still more preferably 40% or less, particularly preferably 30% or less, and most preferably 25% or less.

The reaction rate of the ink after the final exposure is preferably more than 80% and 100% or less, more preferably 85% to 100%, and still more preferably 90% to 100%.

When the reaction rate is more than 80%, the adhesiveness is further improved.

The reaction rate of the ink is determined by the following method.

A substrate that has been processed to the point where the irradiation of the ink with active energy rays has been completed is prepared. A sample piece having a size of 20 mm × 50 mm (which is hereinafter referred to as an irradiated sample piece) is cut from a region of the substrate in which the ink film is present. The cut irradiated sample piece is immersed in 10 mL of THF (tetrahydrofuran) for 24 hours, and an eluate containing the eluted ink is thereby obtained. High-performance liquid chromatography is performed on the obtained eluate to determine the amount of the polymerizable monomers (which is hereinafter referred to as the "monomer amount X1 after irradiation").

Separately, the same procedure as above is repeated except that the ink on the substrate is not irradiated with the active energy rays, and the amount of the polymerizable compounds (which is hereinafter referred to as the "monomer amount X1 without irradiation") is determined.

The reaction rate (%) of the ink is determined from the following formula using the monomer amount X1 after irradiation and the monomer amount X1 without irradiation. Reaction rate of ink (%) = ((monomer amount X1 without irradiation - monomer amount X1 after irradiation) / monomer amount X1 without irradiation) × 100

From the viewpoint of achieving the above-described reaction rate of the ink more easily, the exposure dose of the active energy rays for the pinning exposure is preferably 10 mJ/cm² to 100 mJ/cm² and more preferably 20 mJ/cm² to 60 mJ/cm².

From the viewpoint of completely curing the ink, the exposure dose of the active energy rays for the final exposure is preferably 50 mJ/cm² to 1000 mJ/cm² and more preferably 200 mJ/cm² to 800 mJ/cm².

In the final exposure, from the viewpoint of improving the adhesiveness to the substrate, it is preferable that the ink is irradiated with the active energy rays in an atmosphere with an oxygen concentration of less than 1% by volume. The oxygen concentration is more preferably 0.5% by volume and still more preferably 0.3% by volume.

In the step of irradiating with the active energy rays, from the viewpoint of image quality, it is preferable to irradiate the ink with the active energy rays within 0.1 seconds to 5 seconds after the ink has landed. When the pinning exposure and the final exposure are performed, it is preferable to irradiate the ink with the active energy rays for the pinning exposure within 0.1 seconds to 5 seconds after the ink has landed. The time from the landing of the ink to the start of the irradiation with the active energy rays (with the active energy rays for the pinning exposure when the pinning exposure and the final exposure are performed) is preferably 0.2 seconds to 1 second or shorter.

### [Image recording method B]

An image recording method B according to an embodiment of the disclosure includes the steps of: applying the second ink in the ink set (the ink set according to the second embodiment of the disclosure) to a substrate using an ink jet recording method; irradiating the second ink with active energy rays; applying, using the ink jet recording method, the first ink to the substrate with the second ink applied thereto; and irradiating the first ink with active energy rays.

The type of substrate, the method for applying the inks using the ink jet recording method, and the method for irradiation with the active energy rays are the same as those in the image recording method A.

Features different from the image recording method A will next be described.

Preferably, in the image recording method B, after the application of the second ink, the second ink is subjected to pinning exposure, and the first ink is applied to the pre-cured second ink. After the application of the first ink, the first ink is subjected to pinning exposure, and then the final exposure is finally performed. By pre-curing the second ink, the quality of the final image is improved.

### [EXAMPLES]

The present disclosure will be described more specifically by way of Examples. However, the present disclosure is not limited to the following Examples so long as the Examples are within the scope of the disclosure.

### <Examples 1 to 23 and Comparative Examples 1 to 5>

### [Preparation of first inks C1 to C16 and C1a to C5a]

To prepare first inks C1 to C16 and C1a to C5a (cyan inks), a cyan pigment dispersion was first prepared.

A cyan pigment (30 parts by mass), SOLSPERSE 32000 (9 parts by mass) used as a dispersing agent, 3MPDDA (60 parts by mass) used as a dispersion medium, and UV22 (1 part by mass) used as a polymerization inhibitor were placed in a dispersing motor mill M50 (manufactured by Eiger), and the mixture was subjected to dispersion treatment using zirconia beads with a diameter of 0.65 mm at a peripheral speed of 9 m/s for 4 hours to thereby obtain a cyan pigment dispersion.

The details of the components contained in the cyan pigment dispersion are as follows.

- Cyan pigment: C.I. Pigment Blue 15:4, product name: "Heliogen (registered trademark) Blue D 7110 F," Sun Chemical (manufactured by DIC Corporation)
- SOLSPERSE 32000: Polyethyleneimine-based dispersing agent (product name: "SOLSPERSE 32000" manufactured by Lubrizol)
- 3MPDDA: 3-Methyl-1,5-pentanediol diacrylate (product name: "SR341" manufactured by Sartomer)
- UV22: Mixture of 2,6-bis(1,1-dimethylethyl)-4-(phenylmethylene)-2,5-cyclohexadien-1-one and propoxylated glycerin triacrylate (product name: "IRGASTAB UV-22" manufactured by BASF)

UV22 contains propoxylated glycerin triacrylate as an additional polymerizable compound. However, since the content of propoxylated glycerin triacrylate is very small, UV22 is placed in the "Polymerization inhibitor" columns in tables.

Next, the prepared cyan pigment dispersion was mixed with a specific bifunctional (meth)acrylate(s), a specific monofunctional (meth)acrylate(s), an additional polymerizable compound(s), polymerization initiators, polymerization inhibitors, and surfactants shown in the tables below such that the contents of the components were equal to values (% by mass) in one of the tables. The mixtures were stirred using mixers (product name: "L4R" manufactured by Silverson) under the conditions of 25°C and 5000 rpm for 20 minutes, and first inks C1 to C16 and C1a to C5a were thereby obtained.

### [Preparation of second inks P1 to P8]

Components shown in the tables below, i.e., a specific bifunctional (meth)acrylate, a specific monofunctional (meth)acrylate, an additional polymerizable compound(s), polymerization initiators, a polymerization inhibitor, and a surfactant were mixed such that the contents of the components were values (% by mass) in one of the tables. The mixtures were stirred using mixers (product name: "L4R" manufactured by Silverson) under the conditions of 25°C and 5000 rpm for 20 minutes, and second inks P1 to P8 (clear inks) were thereby obtained.

The details of the components shown in Tables 1 to 5 are described below.

To prepare the inks, Speedcure 7010L (manufactured by Lambson) was used. Speedcure 7010L is a mixture of Speedcure 7010 and EOTMPTA, and the mixing mass ratio is 1:1. Speedcure 7010 is a polymerization initiator, and EOTMPTA is an additional polymerizable compound. Therefore, they will be described in the "Polymerization initiators" section and the "Additional polymerizable compounds" section.

### <Specific bifunctional (meth)acrylates>

Each specific bifunctional (meth)acrylate is a bifunctional (meth)acrylate having a linear or branched alkylene group having 5 to 9 carbon atoms.
- 3MPDDA: As described above.
- HDDA: 1,6-Hexanediol diacrylate (product name: "Viscoat #230" manufactured by OSAKA ORGANIC CHEMICAL INDUSTRY LTD.)
- NDDA: 1,9-Hexanediol diacrylate (product name: "Viscoat #260" manufactured by OSAKA ORGANIC CHEMICAL INDUSTRY LTD.)

### <Specific monofunctional (meth)acrylates>

Each specific monofunctional (meth)acrylate is a monofunctional (meth)acrylate having a hydroxy group.
- 4-HBA: 4-Hydroxybutyl acrylate (product name: "4-HBA" manufactured by OSAKA ORGANIC CHEMICAL INDUSTRY LTD.)
- HPA: Hydroxypropyl acrylate (product name: "HPA" manufactured by OSAKA ORGANIC CHEMICAL INDUSTRY LTD.)
- HEA: Hydroxyethyl acrylate (product name: "HEA" manufactured by OSAKA ORGANIC CHEMICAL INDUSTRY LTD.)
- HPPA: 2-Hydroxy-3-phenoxypropyl acrylate (product name: "Etercure 620-100" manufactured by Eternal Chemical)

### <Acid group-containing polymerizable monomer>

- A-SA: 2-Acryloyloxyethyl succinate (product name: "NK Ester A-SA" manufactured by Shin Nakamura Chemical Co., Ltd.)

### <Acid group-containing polymer>

- Polymer A: Binder A descried in paragraph 0225 in Japanese Patent No. 5588887 (structural unit derived from methacrylic acid : structural unit derived from methyl methacrylate = 20:80)

### <Additional polymerizable compounds>

Each additional polymerizable compound is a polymerizable compound other than the specific bifunctional (meth)acrylates, the specific monofunctional (meth)acrylates, and the acid group-containing polymerizable monomer.
- CTFA: Cyclic trimethylolpropane formal acrylate (product name: "Viscoat #200" manufactured by OSAKA ORGANIC CHEMICAL INDUSTRY LTD.)
- IBOA: Isobornyl acrylate (product name: "SR506" manufactured by Sartomer)
- DDDA: 1, 10-Decanediol diacrylate (product name: "SR595" manufactured by Sartomer)
- BDDA: 1,4-Butanediol diacrylate (product name: "Viscoat #195" manufactured by OSAKA ORGANIC CHEMICAL INDUSTRY LTD.)
- THFA: Tetrahydrofurfuryl acrylate (product name: "Viscoat #150" manufactured by OSAKA ORGANIC CHEMICAL INDUSTRY LTD.)
- EOTMPTA: Trimethylolpropane EO-added triacrylate (component contained in an amount of 50% by mass in ["Speedcure 7010L (product name)" manufactured by Lambson])

### <Polymerization initiators>

- BAPO: Bis(2,4,6-trimethylbenzoyl)phenylphosphine oxide (product name: "Omnirad 819" manufactured by IGM Resins B.V.)
- TPO-L: (2,4,6-Trimethylbenzoyl)ethoxyphenylphosphine oxide (product name: "Omnirad TPO-L" manufactured by IGM Resins B.V.)
- Speedcure 7010: 1,3-Di({α-[1-chloro-9-oxo-9H-thioxanthen-4-yl)oxy]acetylpoly[oxy(1-methylethylene)]}oxy)-2,2-bis({α-[1-methylethylene)]}oxymethyl)propane (component contained in an amount of 50% by mass in ["Speedcure 7010L (product name)" manufactured by Lambson])
- Omni. 907: 2-Methyl-1-[4-(methylthio)phenyl]-2-morpholinopropan-1-one

### <Polymerization inhibitors>

- UV12: N-nitroso-N-phenylhydroxylamine aluminum salt (product name: "FLORSTAB UV-12" manufactured by Kromachem)
- UV22: As described above.

### <Surfactants>

- Tegorad 2010: (Meth)acryloyl group-containing silicone-based surfactant (product name: "Tegorad 2010" manufactured by EVONIK)
- Tegorad 2500: (Meth)acryloyl group-containing silicone-based surfactant (product name: "Tegorad 2500" manufactured by EVONIK)
- Tegorad 2100: (Meth)acryloyl group-containing silicone-based surfactant (product name: "Tegorad 2100" manufactured by EVONIK)

### <Coloring agent>

- Cyan pigment: As descried above.

### <Dispersing agent>

- SOLSPERSE 32000: As descried above.

The prepared first inks C1 to C16 and C1a to C5a and the prepared second inks P1 to P8 were used to record images.

In image recording A, only the first inks were used to record images. In image recording B, the first and second inks were used to record images.

### (Image recording A)

A label substrate (polypropylene seal label (product name: "7093/50 PP Gloss Clear TC AP901 PET30" manufactured by Ritrama) was subjected corona treatment twice using Corona Master (product name: "PS-10S" manufactured by Shinko Electric & Instrumentation Co., Ltd.)) under the conditions of a treatment voltage of 10 kV and a treatment speed of 50 mm/second. The corona treated label substrate was wound around a barrel portion of a PET bottle (product name: "PET 500 round" manufactured by KOKUGO Co., Ltd.). One of the first inks was applied to the corona-treated label substrate using an ink jet recording apparatus (product name: "Cylinder JET" manufactured by Tritek Co., Ltd.) and an ink jet head (product name: "KM1800i" manufactured by KONICA MINOLTA, INC.). Specifically, the first ink was applied to a surface region of the label substrate having a size of 7 cm in the longitudinal direction of the PET bottle × 5 cm in the circumferential direction of the PET bottle under the conditions of an ink droplet amount of 10.5 pL (picoliters) and a resolution of 600 × 600 dpi (dot per inch) to thereby record a 100% solid image with a thickness of 4 µm to 6 µm. After the application of the first ink, an LED light source included with the ink jet recording apparatus was used to irradiate the image with UV rays at an exposure of 10 mJ/cm² to 100 mJ/cm². The LED light source used was a UV-LED irradiator (product name: "G4B" manufactured by KYOCERA Corporation) having a peak wavelength of 385 nm.

Then the PET bottle with the image recorded thereon was placed in an exposing device. The PET bottle was placed horizontally. The exposing device can rotate the PET bottle. While the entire image recorded on the PET bottle was rotated, the LED light source was used to expose the image to light. The exposing device was connected to a nitrogen gas generator equipped with a compressor (product name: "Maxi-Flow 30" manufactured by Inhouse Gas) at a pressure of 0.2 MPa·s, and nitrogen was allowed to flow such that the concentration of oxygen in the exposing device was 1% volume to 10% volume. The LED light source was used to irradiate the image with UV rays at an exposure of 50 mJ/cm² to 500 mJ/cm² to completely cure the first ink, and an image recorded article was thereby obtained. Whether the image was completely cured or not can be judged as to whether the image was transferred to a plain paper sheet (for example, a copy sheet C2 manufactured by Fuji Xerox Co., Ltd., product code: "V436") pressed against the image at a uniform pressure (a constant pressure in the range of 500 mN/cm² to 1,000 mN/cm²). Specifically, the completely cured state is the state in which the image is not transferred at all.

In the image recording described above, the gap between the surface of the PET bottle and the ink jet head was adjusted to 0.5 mm to 1 mm. By adjusting the jetting voltage, the jetted droplet speed was adjusted to 7 m/s to 9 m/s.

### (Image recording B)

One of the second inks was applied to a barrel portion of a PET bottle (product name: "PET 500 round " manufactured by KOKUGO Co., Ltd.) using an ink jet recording apparatus (product name: "CylinderJET" manufactured by Tritek Co., Ltd.) and an ink jet head (product name: "KM1800i" manufactured by KONICA MINOLTA, INC.). Specifically, the second ink was applied to a surface region of the PET bottle having a size of 7 cm in the longitudinal direction of the PET bottle × 5 cm in its circumferential direction under the conditions of an ink droplet amount of 10.5 pL (picoliters) and a resolution of 600 × 600 dpi (dot per inch) to thereby record a 100% solid image with a thickness of 4 µm to 6 µm. Then one of the first inks was applied to the surface region with the second ink applied thereto under the same conditions as those for the second ink to thereby record a 100% solid image with a thickness of 4 µm to 6 µm. After the application of the second ink and also after the application of the first ink, an LED light source included with the ink jet recording apparatus was used to apply UV rays at an exposure of 10 mJ/cm² to 100 mJ/cm². The LED light source used was a UV-LED irradiator (product name: "G4B" manufactured by KYOCERA Corporation) having a peak wavelength of 385 nm.

Then the PET bottle with the image recorded thereon was placed in an exposing device. The PET bottle was placed horizontally. The exposing device can rotate the PET bottle. While the entire image recorded on the PET bottle was rotated, the LED light source was used to expose the image to light. The exposing device was connected to a nitrogen gas generator equipped with a compressor (product name: "Maxi-Flow 30" manufactured by Inhouse Gas) at a pressure of 0.2 MPa·s, and nitrogen was allowed to flow such that the concentration of oxygen in the exposing device was 1% volume to 10% volume. The LED light source was used to irradiate the image with UV rays at an exposure of 50 mJ/cm² to 500 mJ/cm² to completely cure the first and second inks, and an image recorded article was thereby obtained.

In the image recording described above, the gap between the surface of the PET bottle and the ink jet head was adjusted to 0.5 mm to 1 mm. By adjusting the jetting voltage, the jetted droplet speed was adjusted to 7 m/s to 9 m/s.

### [Evaluation]

In each of the Examples and Comparative Examples, the image recorded article obtained by the image recording A was used to evaluate water resistance, odor, and flexibility. Moreover, the jettability of the first ink was evaluated. The image recorded article obtained by the image recording B was used to evaluate water resistance, odor, flexibility, and alkali peelability. The evaluation methods are as follows.

### <Water resistance>

One of the obtained image recorded articles was immersed in ion exchanged water at 10°C to 25°C. After 24 hours, the image recorded article was removed from the ion exchanged water. The image surface of the removed image recorded article was scratched with a pencil (hardness H), and the presence or absence of peeling of the image was visually checked. When no image peeling was found, the above procedure was repeated. Specifically, the image recorded article was again immersed in ion exchanged water and then removed therefrom after 24 hours, and the image surface of the image recorded article was scratched with the pencil (hardness H). This procedure was repeated a maximum of 9 times. When image peeling occurred, the procedure was not repeated any more. The evaluation criteria are as follows. Rank 7 and higher ranks are acceptable levels for practical use.
10: No image peeling was found even after 9 repetitions of the procedure.
9: Image peeling was found after 9 repetitions of the procedure.
8: Image peeling was found after 8 repetitions of the procedure.
7: Image peeling was found after 7 repetitions of the procedure.
6: Image peeling was found after 6 repetitions of the procedure.
5: Image peeling was found after 5 repetitions of the procedure.
4: Image peeling was found after 4 repetitions of the procedure.
3: Image peeling was found after 3 repetitions of the procedure.
2: Image peeling was found after 2 repetitions of the procedure.
1: Image peeling was found after the first procedure.

### <Odor>

A 10 cm × 10 cm image sample was cut from one of the obtained image recorded articles. Within 10 minutes after completion of the image recording, the image sample was placed in a large-mouth glass bottle with a volume of 500 mL, and the glass bottle was tightly sealed and left to stand for 3 days. After 3 days, sensory evaluation for odor was performed. Ten subjects scored the odor. Specifically, when "no odor was detected," a score of 50 was given. When "a slight odor was detected," a score of 47 was given. When "a light odor was detected," a score of 30 was given. When "a distinct odor was detected," a score of 20 was given. When "a strong odor was detected," a score of 0 was given. The odor was evaluated based on the total score. The evaluation criteria are as follows. Rank 7 and higher ranks are acceptable levels for practical use.
10: 495 or higher
9: 490 or higher and lower than 495
8: 485 or higher and lower than 490
7: 480 or higher and lower than 485
6: 470 or higher and lower than 480
5: 460 or higher and lower than 475
4: 450 or higher and lower than 460
3: 440 or higher and lower than 450
2: 430 or higher and lower than 440
1: Lower than 430

### <Flexibility>

Twenty-four hours after the image recording, one of the obtained image recorded articles was bent 180° in an environment of 25°C. After the bending, the presence or absence of cracking or peeling in the bent portion was visually checked. The above procedure was repeated a maximum of 20 times. When cracking or peeling was found in the bent portion, the procedure was not repeated any more. The evaluation criteria are as follows.
10: No cracking or peeling was found even after 20 repetitions of the procedure.
9: Cracking or peeling was found after 16 or more and 20 or less repetitions of the procedure.
8: Cracking or peeling was found after 12 or more and 15 or less repetitions of the procedure.
7: Cracking or peeling was found after 7 or more and 11 or less repetitions of the procedure.
6: Cracking or peeling was found after 6 repetitions of the procedure.
5: Cracking or peeling was found after 5 repetitions of the procedure.
4: Cracking or peeling was found after 4 repetitions of the procedure.
3: Cracking or peeling was found after 3 repetitions of the procedure.
2: Cracking or peeling was found after 2 repetitions of the procedure.
1: Cracking or peeling was found after the first procedure.

### <Jettability>

The jettability of each first ink was evaluated using an ink jet recording apparatus (product name: "Cylinder JET" manufactured by Tritek Co., Ltd.) and an ink jet head (product name: "KM1800i" manufactured by KONICA MINOLTA, INC.). The number of jetting nozzles before image recording was counted using a nozzle check pattern. Then, after image recording was performed for 10 minutes, the number of jetting nozzles after the image recording was counted using the nozzle check pattern.

The number of jetting nozzles before the image recording and the number of jetting nozzles after the image recording were used to compute a reduction in the number of jetting nozzles. The same test was repeated three times, and the jettability was evaluated based on the average reduction N in the number of jetting nozzles. The evaluation criteria are as follows. Reduction in number of jetting nozzles = number of jetting nozzles before image recording - number of jetting nozzles after image recording
10: N is less than 1.
9: N is 1 or more and less than 2.
8: N is 2 or more and less than 3.
7: N is 3 or more and less than 4.
6: N is 4 or more and less than 5.
5: N is 5 or more and less than 7.
4: N is 7 or more and less than 10.
3: N is 10 or more and less than 15.
2: N is 15 or more and less than 20.
1: N is 20 or more.

### <Alkali peelability>

One of the obtained image recorded articles was immersed in a 1.5% by mass aqueous sodium hydroxide solution at 85°C, and the peeling state of the image recorded article was visually observed. The time from the start of immersion of the image recorded article until the image was completely peeled off the image recorded article was defined as peeling time.

The alkali peelability was evaluated based on the peeling time. The shorter the peeling time, the better the alkali peelability. The evaluation criteria are as follows.
10: The peeling time was 3 minutes or shorter.
9: The peeling time was longer than 3 minutes and 4 minutes or shorter.
8: The peeling time was longer than 4 minutes and 5 minutes or shorter.
7: The peeling time was longer than 5 minutes and 7 minutes or shorter.
6: The peeling time was longer than 7 minutes and 8 minutes or shorter.
5: The peeling time was longer than 8 minutes and 9 minutes or shorter.
4: The peeling time was longer than 9 minutes and 12 minutes or shorter.
3: The peeling time was longer than 12 minutes and 15 minutes or shorter.
2: The peeling time was longer than 15 minutes and 30 minutes or shorter.
1: The peeling time was longer than 30 minutes.

The evaluation results are shown in Tables 1 to 5.

The results of the evaluation of the water resistance, odor, and flexibility of each image recorded article obtained by the image recording A and the results of the evaluation of the jettability of each first ink are placed in a column for the first ink. The results of the evaluation of the water resistance, odor, flexibility, and alkali peelability of each image recorded article obtained by the image recording B are placed in a column for the corresponding second ink.

In Tables 1 to 4, "Specific bifunctional (meth)acrylate + specific monofunctional (meth)acrylate" means the total content (% by mass) of the specific bifunctional (meth)acrylate and the specific monofunctional (meth)acrylate(s) with respect to the total amount of polymerizable compounds contained in a first ink. "Specific bifunctional (meth)acrylate / specific monofunctional (meth)acrylate" means the mass ratio of the amount of the specific bifunctional (meth)acrylate to the amount of the specific monofunctional (meth)acrylate(s) in a first ink.

In Table 3, the number of carbon atoms in an alkyl group in each of the specific bifunctional (meth)acrylates and the additional polymerizable compounds is shown.

In Table 4, the molecular weight of each of the specific monofunctional (meth)acrylates and the additional polymerizable compound is shown.

In Table 5, "Specific bifunctional (meth)acrylate + specific monofunctional (meth)acrylate + acid group-containing polymerizable monomer" means the total content (% by mass) of the specific bifunctional (meth)acrylate, the specific monofunctional (meth)acrylate, and the acid group-containing polymerizable monomer with respect to the total amount of polymerizable compounds contained in a second ink.

In Table 5, "Pencil hardness (water of pH 7)" means the pencil hardness after immersion of a cured product of a second ink in water with a pH of 7 for 5 minutes. "Pencil hardness (alkaline aqueous solution of pH 10)" means the pencil hardness after immersion of a cured product of a second ink in an alkaline aqueous solution with a pH of 10 for 5 minutes.

A cured product of each second ink was produced as follows.

The second ink was applied to a plastic sheet substrate (polyethylene terephthalate substrate, thickness: 12 µm, "Taiko PET" manufactured by Futamura Chemical Co., Ltd.) using an ink jet recording apparatus (product name: "Cylinder JET" manufactured by Tritek Co., Ltd.) and an ink jet head (product name: "KM1800i" manufactured by KONICA MINOLTA, INC.) to record a 100% solid image with a thickness of 6 µm under the conditions of an ink droplet amount of 10.5 pL (picoliters) and a resolution of 600 × 600 dpi (dot per inch). After the application of the first ink, the second ink was irradiated with UV rays at an exposure of 10 mJ/cm² using an LED light source included with the ink jet recording apparatus. The LED light source used was a UV-LED irradiator (product name: "G4B" manufactured by KYOCERA Corporation) with a peak wavelength of 385 nm. Then the second ink was irradiated with UV rays at an exposure of 500 mJ/cm² using the LED light source in an atmosphere with an oxygen concentration of 1% by volume to cure the ink, and a cured product was thereby obtained.

The pencil hardness was evaluated by immersing cured products of the second ink in water with a pH of 7 or an alkaline aqueous solution with a pH of 10 for 5 minutes and then performing a pencil hardness test under the conditions of JIS K 5600 5-4(1999).

**Table 1**

| | | Example 1 | | Example 2 | | Example 3 | | Example 4 | | Example 5 | | Example 6 | | Example 7 | |
|---|---|---|---|---|---|---|---|---|---|---|---|---|---|---|---|
| | | First ink C1 | Second ink P1 | First ink C2 | Second ink P1 | First ink C3 | Second ink P1 | First ink C4 | Second ink P1 | First ink C5 | Second ink P1 | First ink C6 | Second ink P1 | First ink C7 | Second ink P1 |
| Specific bifunctional (meth)acrylate | 3MPDDA | 36.2 | 56.8 | 24.2 | 56.8 | 30.2 | 56.8 | 33.2 | 56.8 | 46.2 | 56.8 | 41.2 | 56.8 | 26.2 | 56.8 |
| Specific monofunctional (meth)acrylate | 4-HBA | 40 | 10 | 40 | 10 | 40 | 10 | 40 | 10 | 30 | 10 | 35 | 10 | 50 | 10 |
| Acid group-containing polymerizable monomer | A-SA | - | 15 | - | 15 | - | 15 | - | 15 | - | 15 | - | 15 | - | 15 |
| Additional polymerizable compound | CTFA | - | - | 12 | - | 6 | - | 3 | - | - | - | - | - | - | - |
| | EOTMPTA | 2 | 0.1 | 2 | 0.1 | 2 | 0.1 | 2 | 0.1 | 2 | 0.1 | 2 | 0.1 | 2 | 0.1 |
| Polymerization initiator | BAPO | 4 | 3.8 | 4 | 3.8 | 4 | 3.8 | 4 | 3.8 | 4 | 3.8 | 4 | 3.8 | 4 | 3.8 |
| | TPO-L | 4 | 1 | 4 | 1 | 4 | 1 | 4 | 1 | 4 | 1 | 4 | 1 | 4 | 1 |
| | Speedcure7010 | 2 | 0.1 | 2 | 0.1 | 2 | 0.1 | 2 | 0.1 | 2 | 0.1 | 2 | 0.1 | 2 | 0.1 |
| Polymerization inhibitor | UV12 | 0.5 | 0.2 | 0.5 | 0.2 | 0.5 | 0.2 | 0.5 | 0.2 | 0.5 | 0.2 | 0.5 | 0.2 | 0.5 | 0.2 |
| | UV22 | 0.095 | - | 0.095 | - | 0.095 | - | 0.095 | - | 0.095 | - | 0.095 | - | 0.095 | - |
| Surfactant | Tegorad2010 | 6 | - | 6 | - | 6 | - | 6 | - | 6 | - | 6 | - | 6 | - |
| | Tegorad2500 | 1.5 | - | 1.5 | - | 1.5 | - | 1.5 | - | 1.5 | - | 1.5 | - | 1.5 | - |
| | Tegorad2100 | - | 13 | - | 13 | - | 13 | | 13 | - | 13 | | 13 | | 13 |
| Coloring agent | Cyan pigment | 2.85 | - | 2.85 | - | 2.85 | - | 2.85 | - | 2.85 | - | 2.85 | - | 2.85 | - |
| Dispersing agent | SOLSPERSE 32000 | 0.855 | - | 0.855 | - | 0.855 | - | 0.855 | - | 0.855 | - | 0.855 | - | 0.855 | - |
| Specific bifunctional (meth)acrylate + specific monofunctional (meth)acrylate | | 97.4 | - | 82.1 | - | 89.8 | - | 93.6 | - | 97.4 | - | 97.4 | - | 97.4 | - |
| Specific bifunctional (meth)acrylate / specific monofunctional (meth)acrylate | | 0.91 | - | 0.61 | - | 0.76 | - | 0.83 | - | 1.54 | - | 1.18 | - | 0.52 | - |
| Evaluation | Water resistance | 10 | 10 | 10 | 10 | 10 | 10 | 10 | 10 | 7 | 7 | 9 | 9 | 10 | 10 |
| | Odor | 10 | 10 | 7 | 7 | 8 | 8 | 9 | 9 | 10 | 10 | 10 | 10 | 8 | 8 |
| | Flexibility | 10 | 10 | 10 | 10 | 10 | 10 | 10 | 10 | 7 | 7 | 9 | 9 | 10 | 10 |
| | Jettability | 10 | - | 10 | - | 10 | - | 10 | - | 10 | - | 10 | - | 10 | - |
| | Alkali peelability | - | 10 | - | 10 | - | 10 | - | 10 | - | 7 | - | 9 | - | 10 |

**Table 2**

| | | Example 8 | | Example 9 | | Example 10 | | Example 11 | | Comparative Example 1 | | Comparative Example 2 | |
|---|---|---|---|---|---|---|---|---|---|---|---|---|---|
| | | First ink C8 | Second ink P1 | First ink C9 | Second ink P1 | First ink C10 | Second ink P1 | First ink C11 | Second ink P1 | First ink C1a | Second ink P1 | First ink C2a | Second ink P1 |
| Specific bifunctional (meth)acrylate | 3MPDDA | 16.2 | 56.8 | 41 | 56.8 | 36 | 56.8 | 40.2 | 56.8 | 16.2 | 56.8 | 36.2 | 56.8 |
| Specific monofunctional (meth)acrylate | 4-HBA | 60 | 10 | 40 | 10 | 40 | 10 | 40 | 10 | 40 | 10 | 20 | 10 |
| Acid group-containing polymerizable monomer | A-SA | - | 15 | - | 15 | - | 15 | - | 15 | - | 15 | - | 15 |
| Additional polymerizable compound | CTFA | - | - | - | - | - | - | - | - | 20 | - | - | - |
| | IBOA | - | - | - | - | - | - | - | - | - | - | 20 | - |
| | EOTMPTA | 2 | 0.1 | 2 | 0.1 | 2 | 0.1 | 2 | 0.1 | 2 | 0.1 | 2 | 0.1 |
| Polymerization initiator | BAPO | 4 | 3.8 | 3.2 | 3.8 | 1.6 | 3.8 | 4 | 3.8 | 4 | 3.8 | 4 | 3.8 |
| | TPO-L | 4 | 1 | | 1 | 1.6 | 1 | 4 | 1 | 4 | 1 | 4 | 1 |
| | Speedcure7010 | 2 | 0.1 | 2 | 0.1 | 2 | 0.1 | 2 | 0.1 | 2 | 0.1 | 2 | 0.1 |
| | Omni.907 | - | - | - | - | 5 | - | - | - | - | - | - | - |
| Polymerization inhibitor | UV12 | 0.5 | 0.2 | 0.5 | 0.2 | 0.5 | 0.2 | 0.5 | 0.2 | 0.5 | 0.2 | 0.5 | 0.2 |
| | UV22 | 0.095 | - | 0.095 | - | 0.095 | - | 0.095 | - | 0.095 | - | 0.095 | - |
| Surfactant | Tegorad2010 | 6 | - | 6 | - | 6 | - | 6 | - | 6 | - | 6 | - |
| | Tegorad2500 | 1.5 | - | 1.5 | - | 1.5 | - | 1.5 | - | 1.5 | - | 1.5 | - |
| | Tegorad2100 | - | 13 | - | 13 | - | 13 | - | 13 | - | 13 | - | 13 |
| Coloring agent | Cyan pigment | 2.85 | - | 2.85 | - | 2.85 | - | 2.85 | - | 2.85 | - | 2.85 | - |
| Dispersing agent | SOLSPERSE 32000 | 0.855 | - | 0.855 | - | 0.855 | - | 0.855 | - | 0.855 | - | 0.855 | - |
| Specific bifunctional (meth)acrylate + specific monofunctional (meth)acrylate | | 97.4 | - | 97.6 | - | 97.4 | - | 97.6 | - | 71.9 | - | 71.9 | - |
| Specific bifunctional (meth)acrylate / specific monofunctional (meth)acrylate | | 0.27 | - | 1.03 | - | 0.90 | - | 1.01 | - | 0.41 | - | 1.81 | - |
| Evaluation | Water resistance | 10 | 10 | 10 | 10 | 10 | 10 | 10 | 10 | 9 | 5 | 4 | 4 |
| | Odor | 7 | 7 | 7 | 7 | 7 | 7 | 7 | 7 | 4 | 4 | 4 | 4 |
| | Flexibility | 10 | 10 | 10 | 10 | 10 | 10 | 10 | 10 | 10 | 10 | 10 | 10 |
| | Jettability | 10 | - | 10 | - | 10 | - | 10 | - | 10 | - | 10 | - |
| | Alkali peelability | - | 10 | - | 10 | - | 10 | - | 10 | - | 5 | - | 4 |

**Table 3**

| | | Number of carbon atoms | Example 1 | | Example 12 | | Example 13 | | Comparative Example 3 | | Comparative Example 4 | |
|---|---|---|---|---|---|---|---|---|---|---|---|---|
| | | | First ink C1 | Second ink P1 | First ink C12 | Second ink P1 | First ink C13 | Second ink P1 | First ink C3a | Second ink P1 | First ink C4a | Second ink P1 |
| Specific bifunctional (meth)acrylate | 3MPDDA | 6 | 36.2 | 56.8 | 16.2 | 56.8 | 16.2 | 56.8 | 16.2 | 56.8 | 16.2 | 56.8 |
| | HDDA | 6 | - | - | 20 | - | - | - | - | - | - | - |
| | NDDA | 9 | - | - | - | - | 20 | - | - | - | - | - |
| Specific monofunctional (meth)acrylate | 4-HBA | | 40 | 10 | 40 | 10 | 40 | 10 | 40 | 10 | 40 | 10 |
| Additional polymerizable compound | DDDA | 10 | - | - | - | - | - | - | 20 | - | - | - |
| | BDDA | 4 | - | - | - | - | - | - | - | - | 20 | - |
| | EOTMPTA | | 2 | 0.1 | 2 | 0.1 | 2 | 0.1 | 2 | 0.1 | 2 | 0.1 |
| Acid group-containing polymerizable monomer | A-SA | | - | 15 | - | 15 | - | 15 | - | 15 | - | 15 |
| Polymerization initiator | BAPO | | 4 | 3.8 | 4 | 3.8 | 4 | 3.8 | 4 | 3.8 | 4 | 3.8 |
| | TPO-L | | 4 | 1 | 4 | 1 | 4 | 1 | 4 | 1 | 4 | 1 |
| | Speedcure7010 | | 2 | 0.1 | 2 | 0.1 | 2 | 0.1 | 2 | 0.1 | 2 | 0.1 |
| Polymerization inhibitor | UV12 | | 0.5 | 0.2 | 0.5 | 0.2 | 0.5 | 0.2 | 0.5 | 0.2 | 0.5 | 0.2 |
| | UV22 | | 0.095 | - | 0.095 | - | 0.095 | - | 0.095 | - | 0.095 | - |
| Surfactant | Tegorad2010 | | 6 | - | 6 | - | 6 | - | 6 | - | 6 | - |
| | Tegorad2500 | | 1.5 | - | 1.5 | - | 1.5 | - | 1.5 | - | 1.5 | - |
| | Tegorad2100 | | - | 13 | | 13 | | 13 | | 13 | | 13 |
| Coloring agent | Cyan pigment | | 2.85 | - | 2.85 | - | 2.85 | - | 2.85 | - | 2.85 | - |
| Dispersing agent | SOLSPERSE 32000 | | 0.855 | - | 0.855 | - | 0.855 | - | 0.855 | - | 0.855 | - |
| Specific bifunctional (meth)acrylate + specific monofunctional (meth)acrylate | | | 97.4 | - | 97.4 | - | 97.4 | - | 71.9 | - | 71.9 | - |
| Specific bifunctional (meth)acrylate / specific monofunctional (meth)acrylate | | | 0.91 | - | 0.91 | - | 0.91 | - | 0.41 | - | 0.41 | - |
| Evaluation | Water resistance | | 10 | 10 | 10 | 10 | 10 | 10 | 10 | 10 | 7 | 7 |
| | Odor | | 10 | 10 | 8 | 8 | 10 | 10 | 10 | 10 | 6 | 6 |
| | Flexibility | | 10 | 10 | 10 | 10 | 10 | 10 | 10 | 10 | 6 | 6 |
| | Jettability | | 10 | - | 10 | - | 7 | - | 6 | - | 10 | - |
| | Alkali peelability | | - | 10 | - | 10 | - | 10 | - | 10 | - | 10 |

**Table 4**

| | | Molecular weight | Example 1 | | Example 14 | | Example 15 | | Example 16 | | Comparative Example 5 | |
|---|---|---|---|---|---|---|---|---|---|---|---|---|
| | | | First ink C1 | Second ink P1 | First ink C14 | Second ink P1 | First ink C15 | Second ink P1 | First ink C16 | Second ink P1 | First ink C5a | Second ink P1 |
| Specific bifunctional (meth)acrylate | 3MPDDA | | 36.2 | 56.8 | 36.2 | 56.8 | 36.2 | 56.8 | 36.2 | 56.8 | 36.2 | 56.8 |
| Specific monofunctional (meth)acrylate | 4-HBA | 144 | 40 | 10 | 20 | 10 | 20 | 10 | 20 | 10 | 20 | 10 |
| | HPA | 130 | - | - | 20 | - | - | - | - | - | - | - |
| | HEA | 116 | - | - | - | - | 20 | - | - | - | - | - |
| | HPPA | 222 | - | - | - | - | - | - | 20 | - | - | - |
| Additional polymerizable compound | THFA | 156.2 | - | - | - | - | - | - | - | - | 20 | - |
| | EOTMPTA | | 2 | 0.1 | 2 | 0.1 | 2 | 0.1 | 2 | 0.1 | 2 | 0.1 |
| Acid group-containing polymerizable monomer | A-SA | | - | 15 | - | 15 | - | 15 | - | 15 | - | 15 |
| Polymerization initiator | BAPO | | 4 | 3.8 | 4 | 3.8 | 4 | 3.8 | 4 | 3.8 | 4 | 3.8 |
| | TPO-L | | 4 | 1 | 4 | 1 | 4 | 1 | 4 | 1 | 4 | 1 |
| | Speedcure7010 | | 2 | 0.1 | 2 | 0.1 | 2 | 0.1 | 2 | 0.1 | 2 | 0.1 |
| Polymerization inhibitor | UV12 | | 0.5 | 0.2 | 0.5 | 0.2 | 0.5 | 0.2 | 0.5 | 0.2 | 0.5 | 0.2 |
| | UV22 | | 0.095 | - | 0.095 | - | 0.095 | - | 0.095 | - | 0.095 | - |
| Surfactant | Tegorad2010 | | 6 | - | 6 | - | 6 | - | 6 | - | 6 | - |
| | Tegorad2500 | | 1.5 | - | 1.5 | - | 1.5 | - | 1.5 | - | 1.5 | - |
| | Tegorad2100 | | - | 13 | - | 13 | - | 13 | - | 13 | - | 13 |
| Coloring agent | Cyan pigment | | 2.85 | - | 2.85 | - | 2.85 | - | 2.85 | - | 2.85 | - |
| Dispersing agent | SOLSPERSE 32000 | | 0.855 | - | 0.855 | - | 0.855 | - | 0.855 | - | 0.855 | - |
| Specific bifunctional (meth)acrylate + specific monofunctional (meth)acrylate | | | 97.4 | - | 97.4 | - | 97.4 | - | 97.4 | - | 71.9 | - |
| Specific bifunctional (meth)acrylate / specific monofunctional (meth)acrylate | | | 0.91 | - | 0.91 | - | 0.91 | - | 0.91 | - | 1.81 | - |
| Evaluation | Water resistance | | 10 | 10 | 10 | 10 | 10 | 10 | 7 | 7 | 5 | 5 |
| | Flexibility | | 10 | 10 | 10 | 10 | 10 | 10 | 10 | 10 | 10 | 10 |
| | Odor | | 10 | 10 | 8 | 8 | 7 | 7 | 8 | 8 | 4 | 4 |
| | Jettability | | 10 | - | 10 | - | 7 | - | 10 | - | 10 | - |
| | Alkali peelability | | - | 10 | - | 10 | - | 10 | - | 7 | - | 5 |

**Table 5**

| | | Example 1 | | Example 17 | | Example 18 | | Example 19 | | Example 20 | | Example 21 | | Example 22 | | Example 23 | |
|---|---|---|---|---|---|---|---|---|---|---|---|---|---|---|---|---|---|
| | | First ink C1 | Second ink P1 | First ink C1 | Second ink P2 | First ink C1 | Second ink P3 | First ink C1 | Second ink P4 | First ink C1 | Second ink P5 | First ink C1 | Second ink P6 | First ink C1 | Second ink P7 | First ink C1 | Second ink P8 |
| Specific bifunctional (meth)acrylate | 3MPDDA | 36.2 | 56.8 | 36.2 | 56.8 | 36.2 | 71.8 | 36.2 | 63.8 | 36.2 | 11.8 | 36.2 | 36.8 | 36.2 | 46.8 | 36.2 | 56.8 |
| Specific monofunctional (meth)acrylate | 4-HBA | 40 | 10 | 40 | 25 | 40 | 10 | 40 | 10 | 40 | 10 | 40 | 10 | 40 | 10 | 40 | 10 |
| Acid group-containing polymerizable monomer | A-SA | - | 15 | - | - | - | - | - | 8 | - | 15 | - | 15 | - | 15 | - | 12 |
| Acid group-containing polymer | Polymer A | - | - | - | - | - | - | - | - | - | - | - | - | - | - | - | 3 |
| Additional polymerizable compound | CTFA | - | - | - | - | - | - | - | - | - | 45 | - | 20 | - | 10 | - | - |
| | EOTMPTA | 2 | 0.1 | 2 | 0.1 | 2 | 0.1 | 2 | 0.1 | 2 | 0.1 | 2 | 0.1 | 2 | 0.1 | 2 | 0.1 |
| Polymerization initiator | BAPO | 4 | 3.8 | 4 | 3.8 | 4 | 3.8 | 4 | 3.8 | 4 | 3.8 | 4 | 3.8 | 4 | 3.8 | 4 | 3.8 |
| | TPO-L | 4 | 1 | 4 | 1 | 4 | 1 | 4 | 1 | 4 | 1 | 4 | 1 | 4 | 1 | 4 | 1 |
| | Speedeure7010 | 2 | 0.1 | 2 | 0.1 | 2 | 0.1 | 2 | 0.1 | 2 | 0.1 | 2 | 0.1 | 2 | 0.1 | 2 | 0.1 |
| Polymerization inhibitor | UV12 | 0.5 | 0.2 | 0.5 | 0.2 | 0.5 | 0.2 | 0.5 | 0.2 | 0.5 | 0.2 | 0.5 | 0.2 | 0.5 | 0.2 | 0.5 | 0.2 |
| | UV22 | 0.095 | - | 0.095 | - | 0.095 | - | 0.095 | - | 0.095 | - | 0.095 | - | 0.095 | - | 0.095 | - |
| Surfactant | Tegorad2010 | 6 | - | 6 | - | 6 | - | 6 | - | 6 | - | 6 | - | 6 | - | 6 | - |
| | Tegorad2500 | 1.5 | - | 1.5 | - | 1.5 | - | 1.5 | - | 1.5 | - | 1.5 | - | 1.5 | - | 1.5 | - |
| | Tegorad2100 | | 13 | | 13 | | 13 | | 13 | | 13 | | 13 | | 13 | | 13 |
| Coloring agent | Cyan pigment | 2.85 | - | 2.85 | - | 2.85 | - | 2.85 | - | 2.85 | - | 2.85 | - | 2.85 | - | 2.85 | - |
| Dispersing agent | SOLSPERSE 32000 | 0.855 | - | 0.855 | - | 0.855 | - | 0.855 | - | 0.855 | - | 0.855 | - | 0.855 | - | 0.855 | - |
| Specific bifunctional (meth)acrylate + specific monofunctional (meth)acrylate + acid group-containing polymerizable monomer | | - | 99.9 | - | 99.9 | - | 99.9 | - | 99.9 | - | 44.9 | - | 75.5 | - | 87.7 | - | 96.2 |
| Pencil hardness (water of pH 7) | | - | B | - | 2B | - | H | - | B | - | 2B | - | B | - | H | - | H |
| Pencil hardness (alkaline aqueous solution of pH 10) | | - | 6B | - | 2B | - | H | - | 4B | - | 3B | - | 4B | - | 5B | - | 5B |
| Evaluation | Water resistance | 10 | 10 | 10 | 10 | 10 | 10 | 10 | 10 | 10 | 7 | 10 | 8 | 10 | 9 | 10 | 10 |
| | Flexibility | 10 | 10 | 10 | 10 | 10 | 10 | 10 | 10 | 10 | 10 | 10 | 10 | 10 | 10 | 10 | 10 |
| | Odor | 10 | 10 | 10 | 10 | 10 | 10 | 10 | 10 | 10 | 7 | 10 | 8 | 10 | 9 | 10 | 10 |
| | Jettability | 10 | - | 10 | - | 10 | - | 10 | - | 10 | - | 10 | - | 10 | - | 10 | - |
| | Alkali peelability | - | 10 | - | 6 | - | 3 | - | 8 | - | 7 | - | 8 | - | 9 | - | 9 |

As shown in Tables 1 to 5, in each of Examples 1 to 23, the bifunctional (meth)acrylate(s) having a linear or branched alkylene group having 5 to 9 carbon atoms, the monofunctional (meth)acrylate(s) having a hydroxy group, and the coloring agent are contained, and the total content of the bifunctional (meth)acrylate(s) and the monofunctional (meth)acrylate(s) with respect to the total amount of the polymerizable compounds contained in the ink is 80% by mass or more. Therefore, the odor of the obtained image recorded article was low, and its water resistance was good.

However, in Comparative Examples 1, 2, and 5, the total content of the bifunctional (meth)acrylate and the monofunctional (meth)acrylate was less than 80% by mass. Therefore, both the low odor and the water resistance were not achieved.

In Comparative Example 3, the number of carbon atoms in a bifunctional (meth)acrylate contained in the ink is more than 9, and the jettability was found to be poor.

In Comparative Example 4, the number of carbon atoms in a monofunctional (meth)acrylate contained in the ink is less than 5, and the ink was found to have an odor.

### <Examples 101 to 106>

A first ink C1 (cyan ink), a first ink M1 (magenta ink), a first ink Y1 (yellow ink), a first ink K1 (black ink), a first ink W1 (white ink), and a second ink P1 (clear ink) were prepared.

Method for producing the first ink C1 and the second ink P1 are as described above.

### [Preparation of first inks M1, Y1, and K1]

First, a magenta pigment dispersion, a yellow pigment dispersion, and a black pigment dispersion were prepared.

The magenta pigment dispersion, the yellow pigment dispersion, and the black pigment dispersion were prepared by replacing the cyan pigment used to prepare the cyan pigment dispersion with a magenta pigment, a yellow pigment, and a black pigment, respectively.

The details of the magenta pigment, the yellow pigment, and the black pigment are as follows.
- Magenta pigment: C.I. Pigment RED 122, product name: "TRM-33" manufactured by Dainichiseika Color & Chemicals Mfg. Co., Ltd.
- Yellow pigment: C.I. Pigment Yellow 185, product name: "Paliotol Yellow D 1155" manufactured by Sun Chemical (DIC Corporation)
- Black pigment: Carbon black, product name: "MOGUL E" manufactured by CABOT

Next, the prepared magenta pigment dispersion, the prepared yellow pigment dispersion, and the prepared black pigment dispersion were independently mixed with a specific bifunctional (meth)acrylate, a specific monofunctional (meth)acrylate, an additional polymerizable compound, polymerization initiators, polymerization inhibitors, and surfactants shown in Table 6 such that the contents of the components were equal to values (% by mass) shown in the table. The mixtures were stirred using mixers (product name: "L4R" manufactured by Silverson) under the conditions of 25°C and 5000 rpm for 20 minutes, and the first inks M1, Y1, and K1 were thereby obtained.

### [Preparation of first ink W1]

A white pigment (60 parts by mass), SOLSPERSE 41000 (9 parts by mass) used as a dispersing agent, 3MPDDA (30 parts by mass) used as a dispersion medium, and UV-22 (1 part by mass) used as a polymerization inhibitor were placed in a dispersing motor mill M50 (manufactured by Eiger), and the mixture was subjected to dispersion treatment using zirconia beads with a diameter of 0.65 mm at a peripheral speed of 9 m/s for 4 hours to thereby obtain a white pigment dispersion.

The details of the components contained in the white pigment dispersion are as follows.
- White pigment: Titanium oxide, product name: "KRONOS 2300" manufactured by KRONOS
- SOLSPERSE 41000: product name: "SOLSPERSE 41000" manufactured by Lubrizol

Next, the prepared white pigment dispersion was mixed with a specific bifunctional (meth)acrylate, a specific monofunctional (meth)acrylate, an additional polymerizable compound, polymerization initiators, polymerization inhibitors, and surfactants shown in Table 6 such that the contents of the components were equal to values (% by mass) shown in the table. The mixture was stirred using a mixer (product name: "L4R" manufactured by Silverson) under the conditions of 25°C and 5000 rpm for 20 minutes, and the first ink W1 was thereby obtained.

**Table 6**

| | | First ink C1 | First ink M1 | First ink Y1 | First ink K1 | First ink W1 | Second ink P1 |
|---|---|---|---|---|---|---|---|
| Specific bifunctional (meth)acrylate | 3MPDDA | 38.2 | 36.4 | 37.2 | 39.2 | 25.4 | 56.8 |
| Specific monofunctional (meth)acrylate | 4-HBA | 40 | 40 | 40 | 40 | 40 | 10 |
| Acid group-containing polymerizable monomer | A-SA | - | - | - | - | - | 15 |
| Additional polymerizable compound | EOTMPTA | 2 | 2 | 2 | 2 | 0.05 | 0.1 |
| Polymerization initiator | BAPO | 4 | 4 | 4 | 4 | 3.5 | 3.8 |
| | TPO-L | 2 | 2 | 2 | 2 | 2 | 1 |
| | Speedcure7010 | 2 | 2 | 2 | 2 | 0.05 | 0.1 |
| Polymerization inhibitor | UV12 | 0.5 | 0.5 | 0.5 | 0.5 | 0.5 | 0.2 |
| | UV22 | 0.095 | 0.14 | 0.12 | 0.07 | 0.3 | - |
| Surfactant | Tegorad2010 | 6 | 6 | 6 | 6 | 6 | - |
| | Tegorad2500 | 1.5 | 1.5 | 1.5 | 1.5 | 1.5 | - |
| | Tegorad2100 | - | - | - | - | - | 13 |
| Coloring agent | Cyan pigment | 2.85 | - | - | - | - | - |
| | Magenta pigment | - | 4.2 | - | - | - | - |
| | Yellow pigment | - | - | 3.6 | - | - | - |
| | Black pigment | - | - | - | 2.1 | - | - |
| | White pigment | - | - | - | - | 18 | - |
| Dispersing agent | SOLSPERSE 32000 | 0.855 | 1.26 | 1.08 | 0.63 | - | - |
| | SOLSPERSE 41000 | - | - | - | - | 2.7 | - |
| Specific bifunctional (meth)acrylate + specific monofunctional (meth)acrylate | | 97.5 | 97.4 | 97.5 | 97.5 | 99.9 | - |
| Specific bifunctional (meth)acrylate + specific monofunctional (meth)acrylate + acid group-containing polymerizable monomer | | - | - | - | - | - | 99.9 |
| Specific bifunctional (meth)acrylate / specific monofunctional (meth)acrylate | | 0.96 | 0.91 | 0.93 | 0.98 | 0.64 | - |

### [Image recording]

### - Example 101 -

A prepared primer (Pr1) was applied to a barrel portion of a PET bottle (product name: "PET 500 round" manufactured by KOKUGO Co., Ltd.) using an ink jet recording apparatus (product name: "CylinderJET" manufactured by Tritek Co., Ltd.) and an ink jet head (product name: "KM1800i" manufactured by KONICA MINOLTA, INC.). Specifically, the second ink P1 was applied to a surface region of the PET bottle having a size of 7 cm in the longitudinal direction of the PET bottle × 5 cm in its circumferential direction under the conditions of an ink droplet amount of 10.5 pL (picoliters) and a resolution of 600 × 600 dpi (dot per inch) to thereby record a 100% solid image with a thickness of 6 µm. Then the first ink W1 was applied to the surface region with the second ink P1 applied thereto under the same conditions as those for the second ink P1 to thereby record a 100% white solid image with a thickness of 6 µm. Then the first ink K1 was applied to the surface region with the first ink W1 applied thereto to record a solid black image with a thickness of 2 µm. Then the first ink C1 was applied to the surface region with the first ink K1 applied thereto to record a solid cyan image with a thickness of 2 µm. Then the first ink M1 was applied to the surface region with the first ink C1 applied thereto to record a solid magenta image with a thickness of 2 µm. Then the first ink Y1 was applied to the surface region with the first ink M1 applied thereto to record a solid yellow image with a thickness of 2 µm. After the application of the second ink P1, after the application of the first ink W1, after the application of the first ink K1, after the application of the first ink C1, after the application of the first ink M1, and also after the application of the first ink Y1, the LED light source included with the ink jet recording apparatus was used to apply UV rays at an exposure of 10 mJ/cm² to 100 mJ/cm². Specifically, after the application of the second ink P1, the exposure was set to 10 mJ/cm². After the application of the first ink W1, the exposure was set to 20 mJ/cm². After the application of the first ink K1, the exposure was set to 20 mJ/cm². After the application of the first ink C1, the exposure was set to 20 mJ/cm². After the application of the first ink M1, the exposure was set to 20 mJ/cm². After the application of the first ink Y1, the exposure was set to 100 mJ/cm². The LED light source used was a UV-LED irradiator (product name: "G4B" manufactured by KYOCERA Corporation) having a peak wavelength of 385 nm. Then the PET bottle with the images recorded thereon was placed in an exposing device. The PET bottle was placed horizontally. The exposing device can rotate the PET bottle. While the entire images recorded on the PET bottle were rotated, the LED light source was used to expose the images to light. The exposing device was connected to a nitrogen gas generator equipped with a compressor (product name: "Maxi-Flow 30" manufactured by Inhouse Gas) at a pressure of 0.2 MPa·s, and nitrogen was allowed to flow such that the concentration of oxygen in the exposing device was 1% volume or less. The LED light source was used to irradiate the inks with UV rays at an exposure of 200 mJ/cm² to completely cure all the inks, and an image recorded article was thereby obtained.

In the image recording described above, the gap between the surface of the PET bottle and the ink jet head was adjusted to 0.5 mm to 1 mm. By adjusting the jetting voltage, the jetted droplet speed was adjusted to 7 m/s to 9 m/s. The PET bottle was corona-treated twice in advance using Corona Master (product name: "PS-10S" manufactured by Shinko Electric & Instrumentation Co., Ltd.) under the conditions of a treatment voltage of 10 kV and a treatment speed of 50 mm/second.

### - Example 102 -

An image recorded article was obtained using the same procedure as in Example 101 except for the following.

The second ink P1 was applied to record a 100% solid image with a thickness of 4 µm.

The first ink W1 was applied to record a 100% solid white image with a thickness of 4 µm.

After the application of the second ink P1, after the application of the first ink W1, and after the application of the first ink Y1, the LED light source included with the ink jet recording apparatus was used to apply UV rays at an exposure of 10 mJ/cm² to 100 mJ/cm². Specifically, after the application of the second ink P1, the exposure was set to 10 mJ/cm². After the application of the first ink W1, the exposure was set to 20 mJ/cm². After the application of the first ink Y1, the exposure was set to 100 mJ/cm².

### - Example 103 -

An image recorded article was obtained using the same procedure as in Example 101 except for the following.

The LED light source was used to apply UV rays at an exposure of 500 mJ/cm².

### - Example 104 -

An image recorded article was obtained using the same procedure as in Example 101 except for the following.

After the application of the second ink P1, the LED light source included with the ink jet recording apparatus was used to apply UV rays at an exposure of 10 mJ/cm².

### - Example 105 -

An image recorded article was obtained using the same procedure as in Example 101 except for the following.

After the application of the second ink P1 and after the application of the first ink W1, the LED light source included with the ink jet recording apparatus was used to apply UV rays at an exposure of 10 mJ/cm² to 100 mJ/cm². Specifically, after the application of the second ink P1, the exposure was set to 10 mJ/cm². After the application of the first ink W1, the exposure was set to 20 mJ/cm².

### - Example 106 -

An image recorded article was obtained using the same procedure as in Example 101 except for the following.

After the application of the second ink P1, after the application of the first ink W1, and after the application of the first ink K 1, the LED light source included with the ink jet recording apparatus was used to apply UV rays at an exposure of 10 mJ/cm² to 100 mJ/cm². Specifically, after the application of the second ink P 1, the exposure was set to 10 mJ/cm². After the application of the first ink W1, the exposure was set to 20 mJ/cm². After the application of the first ink K1, the exposure was set to 20 mJ/cm².

The obtained image recorded articles were used to evaluate their water resistance, odor, flexibility, and alkali peelability using the same methods as those in Example 1. Moreover, the jettability of each of the first inks M1, Y1, K1, and W1 was evaluated using the same evaluation method as in Example 1. The evaluation results are shown in Table 7.

**Table 7**

| | Example 101 | Example 102 | Example 103 | Example 104 | Example 105 | Example 106 |
|---|---|---|---|---|---|---|
| Water resistance | 9 | 8 | 9 | 7 | 7 | 8 |
| Odor | 9 | 8 | 8 | 8 | 8 | 9 |
| Flexibility | 9 | 8 | 9 | 7 | 8 | 8 |
| Jettability | 10 | 10 | 10 | 10 | 10 | 10 |
| Alkali peelability | 9 | 9 | 9 | 9 | 9 | 9 |

As shown in Table 7, even when two or more first inks were used, the odor of the obtained image recorded article was low, and its water resistance, flexibility, and alkali peelability were good. The jettability of each of the first inks M1, Y1, K1, and W1 was also good.

The entire contents of the disclosure of JP2022-194438 filed on December 5, 2022 are incorporated herein by reference. All publications, patent applications, and technical standards described herein are incorporated herein by reference to the same extent as if each individual publication, patent, or patent application were specifically and individually indicated to be incorporated by reference.

## Claims

1. An active energy ray curable type ink jet ink comprising: a bifunctional (meth)acrylate having a linear or branched alkylene group having 5 to 9 carbon atoms; a monofunctional (meth)acrylate having a hydroxy group; and a coloring agent,
wherein a total content of the bifunctional (meth)acrylate and the monofunctional (meth)acrylate with respect to a total amount of polymerizable compounds contained in the active energy ray curable type ink jet ink is 80% by mass or more.

2. The active energy ray curable type ink jet ink according to claim 1, wherein a ratio of a content mass of the bifunctional (meth)acrylate to a content mass of the monofunctional (meth)acrylate is 0.3 to 3.5.

3. The active energy ray curable type ink jet ink according to claim 1, further comprising phenylbis(2,4,6-trimethylbenzoyl)phosphine oxide and (2,4,6-trimethylbenzoyl)ethoxyphenylphosphine oxide as polymerization initiators, wherein a total content of the polymerization initiators with respect to a total amount of the active energy ray curable type ink jet ink is 5% by mass or more.

4. The active energy ray curable type ink jet ink according to claim 1, wherein the monofunctional (meth)acrylate has a molecular weight of 130 to 150.

5. An active energy ray curable type ink set comprising: a first ink containing a bifunctional (meth)acrylate having a linear or branched alkylene group having 5 to 9 carbon atoms, a monofunctional (meth)acrylate having a hydroxy group, and a coloring agent; and a second ink,
wherein, in the first ink, a total content of the bifunctional (meth)acrylate and the monofunctional (meth)acrylate with respect to a total amount of polymerizable compounds contained in the first ink is 80% by mass or more, and
wherein, when cured products of the second ink are immersed in water with a pH of 7 or an alkaline aqueous solution with a pH of 10 for 5 minutes, a pencil hardness of the cured product immersed in the alkaline aqueous solution with a pH of 10 is lower than a pencil hardness of the cured product immersed in the water with a pH of 7.

6. The active energy ray curable type ink set according to claim 5, wherein the second ink contains at least one acid group-containing compound selected from the group consisting of an acid group-containing polymerizable monomer and an acid group-containing polymer, and
wherein a total content of the at least one acid group-containing compound with respect to a total amount of the second ink is 8% by mass or more.

7. The active energy ray curable type ink set according to claim 5, wherein the second ink contains a bifunctional (meth)acrylate having a linear or branched alkylene group having 5 to 9 carbon atoms, a monofunctional (meth)acrylate having a hydroxy group, and at least one acid group-containing compound selected from the group consisting of an acid group-containing polymerizable monomer and an acid group-containing polymer, and wherein a total content of the acid group-containing polymerizable monomer, the bifunctional (meth)acrylate, and the monofunctional (meth)acrylate with respect to a total amount of polymerizable compounds contained in the second ink is 70% by mass or more.

8. The active energy ray curable type ink set according to claim 5, wherein, in the first ink, a ratio of a content mass of the bifunctional (meth)acrylate to a content mass of the monofunctional (meth)acrylate is 0.3 to 3.5.

9. The active energy ray curable type ink set according to claim 5, wherein the first ink further contains phenylbis(2,4,6-trimethylbenzoyl)phosphine oxide and (2,4,6-trimethylbenzoyl)ethoxyphenylphosphine oxide as polymerization initiators, and wherein a total content of the polymerization initiators with respect to a total amount of an active energy ray curable type ink is 5% by mass or more.

10. The active energy ray curable type ink set according to claim 5, wherein, in the first ink, the monofunctional (meth)acrylate has a molecular weight of 130 to 150.

11. An image recording method comprising the steps of:
applying the active energy ray curable type ink jet ink according to any one of claims 1 to 4 to a substrate using an ink jet recording method; and
irradiating the applied active energy ray curable type ink jet ink with active energy rays.

12. An image recording method that uses the active energy ray curable type ink set according to any one of claims 5 to 10, the method comprising the steps of:
applying the second ink to a substrate using an ink jet recording method;
irradiating the applied second ink with active energy rays;
applying, using the ink jet recording method, the first ink to the substrate with the second ink applied thereto; and
irradiating the applied first ink with active energy rays.
